# EUROPÄISCHE PATENTSCHRIFT

(11) **EP 1 206 046 B1**
(45) Veröffentlichungstag und Bekanntmachung des Hinweises auf die Patenterteilung: **28.09.2011**
(21) Anmeldenummer: 01124508.1
(22) Anmeldetag: 12.10.2001
(51) Int. Cl.: H04B 3/54, H04B 3/56

(54) **Vorrichtung zur Durchführung sowohl von Messungen als auch von Datenübertragung in elektrischen Energieverteilungnetzen**
Device for performing measurement and data transmission in power line network
Appareil permettant la mesure et la transmission de données dans un réseau de ligne d'alimentation

(30) Priorität: 12.10.2000 DE 10050476
(43) Veröffentlichungstag der Anmeldung: 15.05.2002
(73) Patentinhaber: iAd Gesellschaft für Informatik, Automatisierung und Datenverarbeitung mbH, 90613 Grosshabersdorf (DE)
(72) Erfinder: Hampel, Hermann, Dipl.-Ing., 90613 Grosshabersdorf (DE)
(74) Vertreter: Dreykorn-Lindner, Werner

(56) Entgegenhaltungen:
- EP-A- 0 684 681
- WO-A-94/09572
- DE-A- 19 701 324

## Beschreibung

Die Erfindung betrifft, gemäß Patentanspruch 1, in erster Linie eine Vorrichtung zur Durchführung sowohl von Messungen als auch von Datenübertragung in elektrischen Energieverteilnetzen.

Die Schaffung neuartiger schneller Festnetzzugänge für die Telekommunikation im Ortsnetzbereich - auch Local Loop oder Last Mile genannt - ist derzeit Gegenstand intensiver Entwicklungsarbeiten. Nach der Aufhebung der Fernmeldemonopole hat auf breiter Front ein intensiver Wettbewerb eingesetzt, der jedoch im Ortsnetzbereich bislang kaum zur Wirkung kam. Der Hauptgrund hierfür ist, dass die ehemaligen Monopolisten hier nach wie vor die Eigentümer der Leitungsnetze sind. Alternativen in Form von Mikrowellen-Funknetzen oder Kabel-TV-Netzen sind zur Zeit in Entwicklung. Sie können jedoch aufgrund hoher Kosten in absehbarer Zeit keine flächendeckenden Alternativen zu bestehenden TK-Netzen bieten. Elektrische Energieverteilnetze hingegen haben - wie zahlreiche Studien und Feldversuche ergaben - durchaus dieses Potential. Sie sind flächendeckend und weitaus feiner verzweigt als jedes bestehende TK-Netz, denn sie erreichen nicht nur jedes Haus, sondern unmittelbar jeden Verbraucher elektrischer Energie und jede Steckdose. Aufgrund dieser hervorragenden Perspektiven hat sich unter dem Begriff "PowerLine Communications (PLC)" ein neuer Industriezweig gebildet, der die technische Umsetzung der neuen Möglichkeiten und die Bereitstellung der damit verbundenen Dienstleistungen zum Ziel hat.

PowerLine Communication - Systeme sind Nachrichtenübertragungssysteme, die Information über das Medium Energiekabel verteilen. Insbesondere ist hierbei die Übertragungsstrecke zwischen Trafostation im Niederspannungsnetz und Kundenanlage im Haus von Bedeutung. Die folgenden Betrachtungen beziehen sich nicht auf das Hausverteilnetz der Kundenanlage, sondern auf die Übertragungsstrecke zwischen Trafostation und Hausanschlußkasten, bzw. Stromzähler, wo der Zuständigkeitsbereich der Energieversorgungsunternehmen endet.

Die Topologie dieses Netzabschnittes besitzt meist eine Punkt-zu-Multipunkt-Struktur mit der Trafostation als Knotenpunkt. An diesem Knotenpunkt kann beispielsweise eine Sende-Empfangseinheit angeordnet werden, die hochfrequente Signale bis 30 MHz separat in die abgehenden Kabel einspeist und dem 50Hz Energiestrom überlagert. Weitere Sende-Empfangseinheiten können sich bei der Kundenanlage an der Schnittstelle zwischen Niederspannungsverteilnetz der Energieversorger und Hausinstallationsnetz der Kundenanlage befinden. Hier werden ebenfalls hochfrequente Signale in das Energiekabel eingespeist und empfangen.

Die Überlagerung' des 50Hz-Energiestromes mit hochfrequenten Datensignalströmen bringt grundsätzlich Probleme der elektromagnetischen Verträglichkeit mit sich. Diese Problematik läßt sich in zwei Klassen einteilen:

Erstens die elektromagnetische Beeinflussung durch leitungsgebundene Störspannungen und Störströme: Elektrische Verbraucher, die an das Energienetz angeschlossen sind, müssen eine in Normen festgelegte Störfestigkeit besitzen. Gleichzeitig unterliegen die durch diese Geräte verursachten Netzrückwirkungen Grenzwerten bezüglich Störspannung und Störstrom. Diesen Grenzwerten unterliegt grundsätzlich auch ein PLC-System, falls leitungsgebundene Störsignale in die Kundenanlage eindringen. Während nun herkömmliche Verbraucher so ausgelegt werden, daß die Netzrückwirkungen möglichst weit (mit kostenmäßig vertretbarem Aufwand) unterhalb der Grenzwerte liegen, werden sich PLC-Systeme an diesen Grenzwerten orientieren, um mit möglichst hoher Signalenergie die Fehlerhäufigkeit bei der Übertragung zu minimieren.

Zweitens die elektromagnetische Beeinflussung durch Emission und Immission von Störfeldern: Ein Niederspannungsverteilnetz besitzt grundsätzlich einen unsymmetrischen Aufbau. Dies ist zum einen durch den Aufbau der Energiekabel und zum anderen durch die Ausführung der Erdungspunkte bedingt. Die Erdungsausführung in TN-C-Netzen (Terre-Neutre-Combiné) begünstigt eine Gleichtaktausbreitung des HF-Signals und die Unsymmetrie verursacht eine Gegentakt-Gleichtaktkonversion. Während die Gleichtaktausbreitung zur Emission elektromagnetischer Störfelder führt, machen sich eingekoppelte Störfelder durch die Gegentakt-Gleichtaktkonversion als Störspannungen im Empfänger bemerkbar.

Elektromagnetische Beeinflussung ist stets eine zweiseitige Angelegenheit. Ein elektrisches Gerät kann gleichzeitig Störquelle und Störsenke sein. Die Koppelpfade der elektromagnetischen Beeinflussung sind in beide Richtungen jeweils die gleichen. So ist beispielsweise der Koppelpfad bei Störungen durch Immisson und Emission die Ausbreitung elektromagnetischer Wellen. Gelingt es nun durch entsprechende EMV-Maßnahmen die Emission zu minimieren, so wird sich auch die Störbeeinflussung durch Immission reduzieren.

Wie umfangreiche Untersuchungen ergeben haben, können unterschiedliche EMV-Maßnahmen vorgesehen werden, welche die Störbeeinflussung durch leitungsgebundene und gestrahlte Störgrößen reduzieren. Beispielsweise kann die Reduzierung der leitungsgebundenen Störbeeinflussung durch Entkoppelfilter erfolgen, wobei möglichst alle parasitären leitungsgebundenen Ausbreitungswege des HF-Signals unterdrückt werden. Die Entkoppelfilter werden jeweils an den Enden der Übertragungsstrecke an Trafostation und Hausanschluß eingesetzt.

An der Trafostation verhindern die Filter eine Ausbreitung des HF-Signals auf die Sammelschiene und in die parallel liegenden Abzweige. Somit wird zum einen die HF-Emission an der Sammelschiene reduziert, da die Störspannungspegel auf der Sammelschiene vermindert werden. Zum anderen wird die leitungsgebundene Überlagerung des HF-Signals parallel liegender Abzweige verhindert, wodurch auf parallel liegenden Abzweigen gleiche Frequenzen verwendet werden können.

Am Hausanschluß hat das Entkoppelfilter ebenfalls die Aufgabe, eine Barriere für HF-Signale zu bilden. Die Entkoppelfilter verhindern ein unerwünschtes Eindringen des HF-Signals in das Hausinstallationsnetz der Kundenanlage. Auf Hausinstallationsseite ist somit nur noch mit geringen Störspannungspegeln zu rechnen. Dies ermöglicht es, auf der Nachrichten-Übertragungsstrecke mit höheren Sendepegeln zu arbeiten und gleichzeitig die Grenzwerte für Störspannungspegel auf der Hausinstallationsseite einzuhalten. Sind die Filter als T- oder TT-Filter ausgeführt, so wird gleichzeitig auch verhindert, dass Störspannungspegel aus der Verbraucheranlage heraus in die Übertragungsstrecke eindringen und die Übertragung beeinflussen. Die Entkoppelfilter bewirken somit eine Separierung von Energieversorgung und hochfrequenten Signalen.

An die Entkoppelfilter werden mehrere Anforderungen gestellt: Durch den 50 Hz-Strom darf an den Filtern keine Leistungsaufnahme entstehen. Die Filter dürfen die Energieversorgung nicht beeinträchtigen und müssen gegebenen Sicherheitsanforderungen entsprechen. Die Filter müssen in den Längspfad der Energiekabel möglichst ohne großen Aufwand zu integrieren sein. Die Zugangsimpedanz von der Senderseite aus gesehen, muß groß genug sein, damit die Sendeendstufe einen ausreichenden Sendepegel einprägen kann. Die Einfügungsdämpfung und der Dämpfungsverlauf unter realen Impedanzbedingunzen muß ausreichend sein, um die Störspannungspegel wirkungsvoll zu reduzieren. Die Filter müssen auch bei Unterlagerung großer 50 Hz-Ströme (in der Trafostation bis zu 200 A) noch ausreichende Dämpfungswirkung besitzen (die Induktivitäten dürfen trotz des großen Stromes nicht in die Sättigung gehen).

Die Verwendung von Entkoppelfilter bei PLC mit Trägerfrequenzen über 1 MHz und Signalübertragung zwischen Phase und Erde ist beispielsweise aus der Internationalen Patentanmeldung WO 94/09572 (PCT/GB93/02163) bekannt. Der Entkoppelfilter besteht aus einem Netzwerk von Induktivitäten und Kapazitäten, insbesondere mit zwei Drosselspulen und Kapazitäten gegen Masse.

Für die Strecke zwischen Trafostation und Hausanschluß in den Niederspannungsverteilnetzen wird von den EVU praktisch generell ein Hauptspeisekabel in 4-Leitertechnik eingesetzt. Das bedeutet, daß der N-Leiter (Rückstromleiter des Betriebsstromkreises) und der PE-Leiter (Protective Earth) in einem Leiter, dem PEN-Leiter vereint sind. Diese Form der Netzausführung nennt man TN-C-Netz (Terre-Neutre-Combine) im Gegensatz zum TN-S-Netz (Terre-Neutre-Separé), wo PE- und N-Leiter getrennt geführt werden und nur an einer einzigen Stelle miteinander verbunden sind. Sowohl Trafostation als auch Hausanschluß sind im TN-C-Netz geerdet. Somit bietet sich dem Verbraucherrückstrom zur Trafostation nicht nur der Weg über den N-Leiter, sondern auch der Weg über das Erdreich.

Dasselbe gilt natürlich auch für das hochfrequente Nutzsignal der Datenübertragung. Durch diese räumliche Trennung von Hin- und Rückleiter werden hohe Magnetfelder erzeugt, die benachbarte Stromkreise induktiv beeinflussen und damit Störspannungen induzieren. Ebenso können sich Störspannungen von äußeren Quellen der Betriebsspannung und der Datensignalspannung überlagern. Neben der Induktion durch äußere Magnetfelder treibt eine durch unterschiedliche Erdpotentiale hervorgerufene Gleichtaktspannung einen Gleichtaktstrom durch die Versorgungs- bzw. Datenleitungen. Dieser Gleichtaktstrom bewirkt einen Spannungsabfall an den Impedanzen der Leitung und des Verbrauchers und ist somit eine weitere Störgröße.

Ein möglicher Ansatz in der Eliminierung dieser Störquellen und Störsenken, insbesondere zur Gleichtaktdämpfung, besteht in der Verwendung von stromkompensierten Drosseln, insbesondere Neutralisierungstransformatoren. Die Drossel wird meist so in den Leitungspfad integriert, dass sich bedingt durch den Wicklungssinn die Durchflutungen der in entgegengesetzten Richtungen fließenden Nutzsignalströme kompensieren. Die Drossel ist somit für Nutzsignalströme nicht existent. Für die Gleichtaktströme wirkt die Nenninduktivität der Drossel stark dämpfend und erhöht die Impedanz der Erdschleife, was bei höheren Frequenzen sinngemäß einer Auftrennung der Erdschleife gleichkommt. Oberhalb 1 MHz eignen sich als Neutralisierungstransformatoren sehr gut Ferritringe, wie dies beispielsweise in der DE-Fachzeitschrift "Funkschau" 12/98 im Aufsatz "EMV-Aspekte zu hochfrequenten Signalen im Energiekabel" ausführlich beschrieben ist. Hierbei bilden die Leiter selbst die gleichsinnige Wicklung des Transformators.

Ferritringe können auch zur Entkopplung von Kommunikationssignalen und Stromversorgung benutzt werden, wie dies beispielsweise in der EP 0 141 673 A1 beschrieben und erläutert ist. Daneben ist für diesen Zweck der Entkopplung von HF-Signalen und Stromversorgung auch der Einsatz von Entkoppelfilter möglich, siehe beispielsweise Funkschau-Intensivseminar "PowerLine" am 29. Juni 1998 in München. Hieraus ist die Einbringung von HF-Kurzschlüssen mittels Kapazitäten zwischen den Phasen des Energieversorgungsnetzes zur HF-Entkopplung des Hausanschlusses bekannt. Weiterhin wird in der Trafostation in jede Verbindung vom abgehenden Kabelstrang zur Sammelschiene eine HF-Drossel mit einer relativ kleinen Induktivität von z.B. 10 µH eingesetzt, die bei 1 MHz einen Blindwiderstand von 60 Ω hat. An einem typischen Hausanschluß ist der Aufbau der Drosseln einfacher (statt hohe Ströme bis über 1kA in der Trafostation meist < 50A) und der Wellenwiderstand ist höher als der eines typischen Trafoabgangs. Hinzukommt, dass in der Regel der Hausanschluß einen Stromzähler aufweist, der durch seine Induktivitäten bereits eine gewisse HF-Sperre darstellt. Mit einem passend dimensionierten Übertrager kann somit die Sendestufe des Modems an den Wellenwiderstand des Kabels angepaßt werden.

Durch Einkopplung äußerer Magnetfelder werden, wie bereits oben erwähnt, Gleichtaktspannungen induziert, die zu der Ausbreitung eines Gleichtaktstromes auf der Übertragungsstrecke führen. Dieser Gleichstrom bewirkt einen Spannungsabfall an der Empfängerimpedanz, der sich als Störspannungspegel bemerkbar macht. Dieser durch Unsymmetrien hervorgerufene Vorgang wird Gleichtakt/Gegentaktkonversion genannt. Eine weitere Reduzierung der Emission und Immission von Störfeldern durch Symmetrierung kann durch Art der Einspeisung, d.h. durch die Anpassung an den Wellenwiderstand mittels Konditionierungsnetzwerk erfolgen. Die einphasige Ankopplung bei der Datenübertragung mit Hilfe eines Koppelkondensators (galvanische Trennung vom Stromnetz und Ausfilterung niederfrequenter Störsignale) und zugehörigem Entladewiderstand ist aus z.B. EP 0 684 681 A1 bekannt. In Verbindung mit einem HF-Übertrager bewirkt diese physikalische Netzanbindung eine galvanische Trennung vom Stromnetz, die Ausfilterung niederfrequenter Störsignale durch Hochpasswirkung und die Anpassung der Netzimpedanz an die Eingangsimpedanz einer nachfolgenden Elektronikeinrichtung mit mehrstufiger Filterung (passive Bandpassfilter) und geregelter Verstärkung (Regelkreis mit Hüllkurvendetektor, PI-Regler, Proportionalglied und nichtinvertierenden Wechselspannungsverstärker). Weiterhin kann in der Ankoppelung parallel zur Sekundärwicklung des HF-Übertragers eine Supressordiode geschaltet sein, welche die netzseitigen Hochspannungsspitzen unterdrückt.

Bei der netzgebundenen Übertragungstechnik wird das 230V/50Hz-Stromversorgungsnetz, oder ein anderes, z.B. 110V/60Hz-Netz, zusätzlich zu seiner herkömmlichen Stromversorgungsfunktion als Bussystem für die Übertragung von Informationen benutzt. Eine solche Technik wird im Rahmen der Gebäudeautomatisierung als Installationsbussystem zur flexiblen logischen Zuordnung von Sensoren (Schalter, Temperaturfühler, Windmesser, Steuergeräte) zu Aktoren (Dimmer, Heizungen, Jalousien etc.) eingesetzt. Der Vorteil einer besonders kostengünstigen Lösung wird erkauft durch die gemeinsame Nutzung der Stromversorgungsleitung mit den damit verbundenen Nachteilen, die durch Netzstörungen und schwankende Güte des Übertragungskanals für die Nutzinformationen entstehen können.

Unter Beachtung europäischer Normen (CENELEC EN 50065) stehen derzeit Techniken bereit, welche die bidirektionale Datenübertragung mit Raten von einigen hundert kBit/s erlauben. In der EN 50065 werden vier Frequenzbereiche, die dort maximal zulässigen Sendeamplituden und die Nutzungsrechte spezifiziert. Im Band A nutzen in Europa Energieversorgungsunternehmen den Bereich von 9 ... 95 kHz mit einer maximalen Sendeamplitude von 10V. Auf der Verbraucherseite steht in Europa der Bereich von 95 ... 148.5 kHz mit einer maximalen Sendeamplitude von 1,2V zur Verfügung (Band B bis Band D). Bei der Datenübertragung müssen Buskoppelbausteine, welche die Sende- und Empfangsfunktionen des Netzübertragungssystems erfüllen, den Besonderheiten Rechnung tragen, die durch die 230 V-Stromversorgungsleitung als Bus gegeben sind. Dazu gehören in erster Linie die Notwendigkeit der galvanischen Trennung zwischen Bus und Applikation, zweitens das Problem der variierenden Impedanz des jeweiligen Punktes im Versorgungsnetz, an dem der Buskoppelbaustein angeschlossen ist, drittens die damit verbundenen Unterschiede im auf das Netz aufgeprägten Sendepegel und der damit verbundenen Sendereichweite und viertens der Signalempfang unter Präsenz verschiedener Netzstörungen im Sendefrequenzband, wie z. B. Surge- und Burst-Impulse sowie verschiedene Formen des Rauschens.

Aus der DE 197 54 800 A1 ist eine Buskoppeleinrichtung bekannt, bei der die auf das Netz aufgeprägte Sendespannung unabhängig von der Phasenlage der Netzimpedanz (und weitgehend auch unabhängig vom Betrag der Netzimpedanz) ist, bei der die galvanische Isolation und die Empfangsempfindlichkeit der Buskoppeleinrichtung und der daran angeschlossenen Geräte unbeeinflußt bleibt und bei der eine verbesserte Unterdrückung von Störsignalen außerhalb des Nutzfreqüenzbandes der HF-Signale erreicht wird. Im einzelnen ist in der Buskoppeleinrichtung für ein Installationsbussystem mit Stromversorgungsnetz-gebundener Informationsübertragung ein Einkoppelkreis mit einem HF-Übertrager vorhanden, zu dessen Primärwicklung zumindest ein Entkopplungskondensator und eine Kompensationsinduktivität in Serie geschaltet sind, und diese Serienschaltung ist mit einem Niederspannungsnetz verbindbar. Die Induktivität ist so ausgelegt, dass ihre Impedanz bei der Frequenz eines einzigen verwendeten HF-Trägersignals, oder eines Mittelwerts der Frequenzen der HF-Trägersignale im Fall der Verwendung mehrerer HF-Trägersignale, die Impedanz des Entkopplungskondensators durch eine Serienresonanz kompensiert, wobei die Induktivität auch unter Berücksichtigung von Streuinduktivitäten des HF-Übertragers ausgelegt ist. Weiterhin kann in die Serienschaltung von Entkopplungskondensator, Induktivität und Primärwicklung ein Sicherungswiderstand eingefügt werden. Schließlich ist für den Fall, dass auf der Sekundärseite des Übertragers ein Sendeverstärker angeschlossen ist, der einen Auskoppelkondensator enthält, oder der über einen solchen gleichspannungsfrei angeschlossen ist, zusätzlich eine sekundärseitige Kompensation mittels einer sekundärseitigen Induktivität durchgeführt. Dabei ist diese sekundärseitige Induktivität in Reihe mit der Sekundärwicklung des Übertragers geschaltet, und kompensiert die Impedanz des Auskoppelkondensators bei der Frequenz des HF-Trägersignals oder des Mittelwerts von HF-Trägersignal-Frequenzen. Durch diese Art der Vorkompensation arbeitet das System in stark induktiven Netzen genauso sicher und erzielt ähnliche Reichweiten, wie in schwach induktiven oder auch kapazitiven Netzen.

Neben der vorstehend geschilderten Einrichtungen zur Kommunikation in PLC-Systemen sind auch Einrichtungen zur Realisierung von Meßfunktionen bekannt. In der Regel wird die Spannung über einen Spannungsteiler und der Strom mit Hilfe eines Shunts gemessen, aber auch die Verwendung von Übertragern bei der Strommessung ist beispielsweise aus der DE 197 01 324 A1 bekannt. Bei dem dort beschriebenen Verfahren bzw. Schaltungsanordnung zur Messung von Wechselstrom niedriger Frequenz wird von einem als Transformator ausgebildeten Stromwandler, dessen Primärwicklung von dem zu messenden Wechselstrom durchflossen ist und an dessen Sekundärwicklung Mittel zur Wandlung des sekundären Meßstromes in eine adäquate Meßspannung angeschlossen sind, ausgegangen. Im einzelnen wird zur weitgehenden Entkopplung der Meßspannung von den nichtlinearen frequenz-, amplituden- und temperaturabhängigen Übertragungseigenschaften des Stromwandlers vorgeschlagen, den Frequenzgang bestimmenden Innenwiderstand der Sekundärwicklung durch einen virtuellen, negativen Serienwiderstand zu kompensieren. Weiterhin ist vorgesehen, dass die Mittel zur Wandlung des sekundären Meßstroms in eine adäquate Meßspannung eine nichtinvertierende, gegengekoppelte Verstärkerschaltung umfassen und dass die Sekundärwicklung des Stromwandlers in einem zusätzlichen Mitkopplungsnetzwerk der Verstärkerschaltung angeordnet ist.

Zur Entwicklung von Kommunikationssystemen zur schnellen Datenübertragung über Energieverteilnetze und zur Fehlersuche beim Betrieb solcher Systeme, insbesondere zur Netzdiagnose ist es erforderlich, die nachrichtentechnischen Eigenschaften der Netze für einen Frequenzbereich von einigen kHz bis über 10 MHz zu berücksichtigen. In der Regel ergibt sich ein recht bizarrer Dämpfungsverlauf mit einem Anstieg der Dämpfung mit wachsender Frequenz. Es genügt keineswegs, nur wenige exemplarische Messungen durchzuführen, da Niederspannungsnetze sehr heterogen sind und viele Parameter der Netztopologie und der verwendeten Kabel den Frequenzgang der Dämpfung beeinflussen. Insbesondere die Länge der Impulsantwort ist maßgebend Für die Festlegung wichtiger Übertragungssystemparameter, wie z.B. die Dauer des sogenannten Schutz- oder Guard-Intervalls bei OFDM (Orthogonal Frequency Division Multiplexing - das bevorzugte Modulationsverfahren für Powerline Telekommunikation). Weiterhin ist zu berücksichtigen, dass die Messstrecken sehr unterschiedlich sind, z.B. Messungen über kurze Distanzen bis zu einigen 10 Metern in Gebäuden und Messungen zwischen Trafostation und Hausanschluß mit Strecken von einigen hundert Metern. Eine weitere Besonderheit bei Energieverteilnetzen ist, dass man es dort stets mit einem gewissen Störpegel zu tun hat, der nicht abgeschaltet werden kann. Der reale PLC-Betrieb muss ja am "lebenden" Netz, d.h. ohne Unterbrechung der Energieversorgung stattfinden. Soll beispielsweise die komplexe Übertragungsfunktion und/oder die Impulsantwort sogenannter PowerLine-Kanäle bestimmt werden, so ist eine Erhöhung der Sendeenergie nur durch eine Erhöhung der Impulsamplitude möglich, da eine Verlängerung der Impulsdauer zu einer Verringerung der Bandbreite des Sendesignals führt. Eine Erhöhung der Sendeamplitude stellt zum einen hohe Anforderungen an die Linearität und Spitzenleistung der Endstufe des Meßsenders und ist zum anderen problematisch beim Einsatz an in Betrieb befindlichen Niederspannungsnetzen, da durch sehr hohe Impulsamplituden Störungen bei angeschlossenen Verbrauchern hervorgerufen werden können. Des weiteren können Nichtlinearitäten die Ergebnisse verfälschen, da bei der Messung Amplituden zum Einsatz kommen, die deutlich höher sind als die Amplituden typischer PLC-Sendesignale. Wie die vorstehende Würdigung des Standes der Technik aufzeigt, ist die aufwandsgünstige und genaue Abstimmung von Entkopplungsfiltern, Konditionierungsnetzwerken, Ankoppelschaltung und dergleichen auf Energieverteilnetzen mit bisherigen Geräten und Verfahren nur sehr eingeschränkt möglich.

Der Erfindung liegt die Aufgabe zugrunde, eine Vorrichtung kosteneffizient derart zu realisieren, dass auf einfache Art und Weise die Durchführung universeller Messungen und/oder Datenübertragung bei Niederspannungsnetzen unter Berücksichtigung deren nachrichtentechnischer Eigenschaften ermöglicht wird.

Diese Aufgabe wird, ausgehend von einer Vorrichtung zur Durchführung sowohl von Messungen als auch von Datenübertragung in elektrischen Energieverteilnetzen gemäß Patentanspruch 1 gelöst, indem diese
a) für den niedrigen Frequenzbereich bis einigen KHz mindestens ein mit allen drei Phasenleitern und dem Nulleiter und/oder für den höheren Frequenzbereich ein mit im 4-Segment-Kabel gegenüberliegenden Phasenleitern verbundenes und auf der Netzseite angeordnetes Ankoppelmodul,
b) ein Entkoppelfilter mit mindestens zwei Paaren von in den Längspfad der Leiter integrierten Spulen sowie mindestens drei zwischen die Leiter geschalteten Impedanzen,
c) ein sowohl auf der Netzseite als auch auf der Verbraucherseite angeordnetes Konditionierungsnetzwerk, bestehend aus mindestens einer zwischen zwei Leitern geschalteten Impedanz,
d) ein Messmodul mit mindestens einem Shunt oder Übertrager, welcher mit mindestens, einem Leiter verbunden ist,
e) ein mit dem Messmodul und mit mindestens einem Ankoppelmodul verbundenes DSP- und MCU-Modul und
f) eine mit dem DSP- und MCU-Modul in Verbindung stehende Anzeigeeinrichtung sowie ein Stromversorgungsmodul
aufweist, wobei das DSP-Modul Übertragungs-, Mess- und Überwachungsaufgaben im Timesharing-Verfahren gemäß ihrer jeweiligen Priorität bearbeitet und das MCU-Modul die Steuerung des DSP-Moduls und die Auswertung der vom DSP-Modul gelieferten Daten vornimmt.

Die erfindungsgemäße Vorrichtung weist den Vorteil auf, dass auf überraschend einfache Art und Weise die einzelnen Module für verschiedene Anwendungen individuell angeordnet bzw. eingesetzt werden können, da erstmalig deren verschiedene Funktionen, insbesondere zur Durchführung sowohl universeller Messungen als auch der Nachrichtenübertragung, und gegenseitige Beeinflussung bei der kombinatorischen Verschmelzung berücksichtigt und aufeinander abgestimmt wurde. Diese sind:
➢ Metering: Die Reihenfolge von DSP- und MCU-Modul und Entkoppelfilter einschließlich Stromversorgung werden vertauscht, um die Stromaufnahme der Meß-/Übertragungseinrichtung nicht zu erfassen.
➢ Pumpe, Motor u.ä. als Verbraucher: Der Entkoppelfilter für die hochbitratige Übertragung von HF-Signalen dient zusätzlich zur Strombegrenzung im Anlauf bei Motoren und zur Verbesserung der Störeigenschaften.
➢ Netzdiagnose: Durch den Entkoppelfilter lassen sich Leitungs- und Störmessungen für den Innerhaus- und Außerhausbereich getrennt voneinander durchführen.
➢ Verbraucheranschluß: Anstelle eines Verbrauchers läßt sich auch ein Schaltmodul mit Lastrelais anschließen.
➢ Stromsparende Anzeigeeinrichtung: Anzeigeeinrichtung z.B. Display wird nur aktiv bei bestimmtem Ereignis: Bewegungssensor, Tastendruck, Änderungen des Umgebungslichts.
➢ DSP- und MCU-Modul: Netzströme und -Spannungen werden messtechnisch erfasst (Strommessung mit Shunts oder Übertragern)
   - DSP (digital signal processor): im Timesharing-Verfahren werden Übertragungs-, Meß- und Diagnoseaufgäben gemäß ihrer jeweiligen Priorität bearbeitet; Ermittlung von Energiegrößen wie z.B. Blind-, Wirku. Scheinleistung sowie Größen zur Kontrolle/Diagnose bzw. Steuerung von Frequenzumrichtern und Asynchronmotoren; Verbraucherschutz durch Kurzschluß- und FI-Messung und u.ä. Diagnosen; die Fernabfrage bzw. -Kontrolle der Meßdaten und Datenübertragung kann über eine separate PC-Schnittstelle mit dem DSP als Transceiver erfolgen.
   - MCU (microcontroller unit): Protokollschichten und Steuerung der Applikationen.

Weiterhin ist von Vorteil, dass eine Integrierbarkeit des Gesamtmoduls am Zähler des Hausanschlusses sowie an der Trafostation möglich ist. Die Gleichtakt/Gegentaktkonversion laßt sich reduzieren, indem nachfolgende Methode der Aus- und Einkopplung eingesetzt wird. Zunächst wird davon ausgegangen, dass die Einspeisung des HF-Signales auf je zwei Phasen erfolgt, und der PEN-Leiter nicht gespeist wird. Der PEN-Leiter besitzt durch die unmittelbare Erdschleife ein erhöhtes Störspektrum und wird deshalb nicht zur Signaleinkopplung herangezogen. Für folgende Betrachtung wird von einem Ersatzschaltbild der Übertragungsstrecke mit Sender und Empfängerimpedanz ausgegangen. Eine Gleichtaktspannung (hervorgerufen durch Induktion oder unterschiedliche Erdpotentiale an Trafostation und Hausanschluß) führt nicht zu einem Spannungsabfall an der Empfängerimpedanz, falls die Impedanzen der gespeisten Leitungen gegen Erde gleich groß sind. Betrachtet man den Aufbau eines 4-Segment-Kabels, erkennt man, dass die Bedingung C1'=C2' erreicht wird, wenn man auf die beiden, dem PEN benachbarte Phasen, einspeist. Der Kapazitätsbelag C' ist für diese gegenüberliegenden Leiter zum PEN-Leiter identisch. Durch diese Art der Einspeisung wird die Symmetrie der Übertragungsstrecke erhöht und die Gleichtakt/Gegentaktkonversion verringert, wobei die nachrichtentechnischen Eigenschaften der Netze für einen Frequenzbereich von einigen kHz bis über 10 MHz, insbesondere der Dämpfungsverlauf mit Einbrüchen und einem Anstieg der Dämpfung mit wachsender Frequenz auf überraschend einfache Art und Weise berücksichtigt wird. Hierbei werden erstmalig Entstörkondensatoren gleichzeitig als Koppelkondensatoren benutzt.

Weiterhin ist es - infolge der Modularität der erfindungsgemäßen Vorrichtung - möglich für Analysen der Netzgrößen wie z.B. Transientenmessungen die Berechnungen softwaremäßig (im DSP-Modul) oder - speziell bei aufwendigen Berechnungen - in zusätzlich vorgesehener Hardware durchzuführen. In vorteilhafter Weise ist auch die Einbeziehung von Übertragern zur Leistungsmessung des Messmoduls in den Entkoppelfilter, die Einbeziehung des Konditionierungsnetzwerks in das Ankoppelmodul und die Vertauschung von DSP/MCU-Modul und Messmodul und Stromversorgung und Entkoppelfilter möglich. Die Impedanzen des Entkoppelfilters sind vorzugsweise Kapazitäten.

Schließlich kann mit der erfindungsgemäßen Ausgestaltung des Ankoppelmoduls parallel im niedrigen Frequenzbereich mit 3-phasiger Ankopplung und im höheren Frequenzbereich mit Ankopplung auf gegenüberliegende Phasen (bei dieser Art der Einspeisung wird bei einem 4-Segment-Kabel die Symmetrie der Übertragungsstrecke erhöht und damit die Gleichtakt/Gegentaktkonversion verringert) auf dem Stromnetz übertragen werden. Das Konditionierungsnetzwerk kann auch im Ankoppelmodul integriert sein, d.h. das bzw. die beiden Ankoppelmodule (siehe Patentanspruch 3) enthalten bereits die Konditionierungsimpedanzen. Dies hat den Vorteil, dass eine zusätzliche Anbringung von Bauelementen (nämlich des Konditionierungsnetzwerks) zwischen den Leitern wegfällt, da diese bereits im Ankoppelmodul integriert,sind.

Weiterhin wird diese Aufgabe, ausgehend von einer Vorrichtung zur Durchführung sowohl von Messungen als auch von Datenübertragung in elektrischen Energieverteilnetzen gemäß Patentanspruch 9 gelöst, indem diese
a) für die Energiemessung und Messung im niedrigen Frequenzbereich bis einigen KHz, ein mit allen drei Phasenleitern und dem Nulleiter verbindbares und auf der Netzseite angeordnetes erstes Messmodul, bestehend aus Antialiasingfilter, einen mit diesem verbundenen ΣΔ-Modulator und mindestens einem mit diesem verbundenen Dezimationsfilter,
b) für die Transientenanalyse im höheren Frequenzbereich ein mit allen drei Phasenleitern und dem Nulleiter verbindbares und auf der Netzseite angeordnetes zweites Messmodul, bestehend aus mindestens einem Eingangsverstärker, einem mit diesem verbundenen Filter und einem Analog/Digital-Wandler mit nachgeordnetem Mischer und
c) ein mit den beiden Messmoduln in Verbindung stehendes DSP- und MCU-Modul
aufweist, wobei das DSP-Modul Übertragungs-, Mess- und Diagnoseaufgaben im Timesharing-verfahren gemäß ihrer jeweiligen Priorität bearbeitet und das MCU-Modul die Steuerung der Applikationen vornimmt.

Die zweite Ausführungsform der erfindungsgemäßen Vorrichtung ermöglicht mit geringem Schaltungsaufwand die Energiemessung und Ermittlung der für die Überwachung der Elektroenergiequalität (EEQ) relevanten Größen. Für die Energiemessung ist die Erfassung von Oberwellen bis mindestens zur 20sten Harmonischen erforderlich. Daher werden beim erfindungsgemäßen Konzept bei der Energiemessung Frequenzen bis mindestens 1 kHz (bei 50 Hz) und 1,2 kHz (bei 60 Hz) erfasst. Für die Überwachung der Elektroenergiequalität sind grundsätzlich drei Bereiche vorgesehen. So können zum Beispiel Analysen von Signalen (Spannung und Strom) im Bereich von 50 Hz bis 2000 Hz, Analysen im Bereich von 2000 Hz bis 9000 Hz und eine Transientenanalyse mit einer Abtastrate im MHz-Bereich durchgeführt werden.

Die Abtastwerte für die Transientenanalyse werden über den analogen Empfangspfad, der sonst für die Datenübertragung über das Stromnetz benutzt wird, erfasst. Hierbei sind erfindungsgemäß die Transientenanalyse mit der Datenübertragung harmonisiert und DSP-Modul bzw. MCU-Modul führen Berechnungen durch für,
- die Datenübertragung ,
- die Energiemessung und
- die Überwachung und Steuerung der Elektroenergiequalität.

Die Aufgaben des DSP-Moduls sind im einzelnen:
- Datenübertragung: Aufgaben der physikalischen Schicht (FFT, IFFT und Modulation/ Demodulation)
- Energiemessung: Darstellung der Eingangsgrößen (z.B. Energie, Leistung)
- Überwachung der Elektroenergiequalität: Ermittlung der Kenngrößen der Energiequalität (durch z.B. FFT, THD [total harmonic distortion], symmetrische Komponenten)
   und die Aufgaben des MCU-Moduls sind:
- Datenübertragung: höhere Protokollschichten (z.B. Netzwerkmanagement, Fehlerprotokoll, Peripherie)
- Energiemessung: Datenverwaltung (z.B. Datentransport zum zentralen Verarbeitungssystem, Lastprofilspeicher)
- Überwachung und Steuerung der Elektroenergiequalität: Datenverwaltung (z.B. Datentransport vom/ zum zentralen Steuer- und Verarbeitungssystem, Lastprofilspeicher, Einflussnahme auf die Energiequalität, z.B. Steuerung eines Kompensationsreglers).

Die erzeugten Daten und Werte können dann über das Stromnetz zu einem zentralen Steuer- und Verarbeitungssystem transportiert und dort ausgewertet werden. Somit ist dann z.B. die Kontrolle bzw. Steuerung der Energiequalität und/oder die Energieverrechnung möglich.

Bei einer bevorzugten Ausgestaltung der Erfindung besteht, gemäß Patentanspruch 2, das Konditionierungsnetzwerk aus drei jeweils zwischen zwei Phasenleitern geschalteten Impedanzen, welche eine Reihenschaltung aus einem Widerstand und einem Kondensator aufweisen.

Diese Ausgestaltung der Erfindung gemäß Patentanspruch 2 weist den Vorteil auf, dass zur Vermeidung von Reflexionen ein Abschluß der Übertragungsstrecke mit dem Wellenwiderstand erfolgt. Messungen an einem Musternetzaufbau und Modellierung des Energiekabels haben gezeigt, dass im Frequenzgang der Übertragungsstrecke eine selektive Dämpfung vereinzelter Frequenzbereiche auftritt. Die Ausprägung dieser sogenannten Notches aufgrund von Fehlanpassungen, die zu Mehrwegeausbreitung der HF-Signale führen, lässt sich durch eine Netzkonditionierung erheblich verringern. Eine Angabe des Wellenwiderstandes eines 4-Segmentkabels und somit der Aufbau und Dimensionierung des Konditionierungsnetzwerkes ist nur unter der Angabe des betrachteten Leiterpaares sinnvoll. So ist der Wellenwiderstand benachbarter Leiter verschieden zu dem Wellenwiderstand gegenüberliegender Leiter. Beim NAYY150SE-Kabel ist der Wellenwiderstand benachbarter Leiter kleiner als der gegenüberliegender Leiter, da der Kapazitätsbelag benachbarter Leiter größer ist. Das Konditionierungsnetzwerk wird nun so ausgeführt, daß die resultierende Impedanz zwischen zwei Leitern gerade dem Wellenwiderstand dieses Leiterpaares entspricht. Konditioniert werden nur die drei Phasen gegeneinander. Eine Konditionierung des PEN-Leiters würde eine Parallelimpedanz zu den beiden Kondensatoren ergeben und somit lediglich die Symmetrie beeinträchtigen. Vorteile der Netzkonditionierung sind ein geglätteter Frequenzgang, eine definierte Zugangsimpedanz für Sender und Empfänger und damit auch eine Unabhängigkeit von der unbekannten Hausanschlussimpedanz. Hierdurch wird auch die Impedanzmodulation unterdrückt, die eine Kanalschätzung und eine Einstellung der AGC stört.

In Weiterbildung der Erfindung ist, gemäß Patentanspruch 3, ein Erweiterungsmodul vorgesehen, welches mit zwei sowohl auf der Netzseite als auch auf der Verbraucherseite angeordneten Ankoppelmoduln und dem DSP- und MCU-Modul verbunden ist.

Diese Weiterbildung der Erfindung weist den Vorteil auf, dass mit dem Erweiterungsmodul ein Kommunikations-Gateway zwischen Außer- und Innerhausbereich entsteht. Derzeit ist lediglich der Frequenzbereich zwischen 9 und 148,5 kHz (CENELEC EN 50065) freigegeben. Falls zukünftig eine Übertragung auch in höheren Frequenzlagen stattfindet, ist eine einfache Erweiterbarkeit gegeben. Das Gesamtsystem muss nicht zwei Ankoppelmodule enthalten. Will man beispielsweise nur einen Stromzähler realisieren, welcher die Daten zur Trafostation überträgt, so entfällt das zweite Ankoppelmodul (einschließlich Konditionierungsnetzwerk und Erweiterungsmodul). Für entsprechende Anwendungen ist die Netzkonditionierung optional, d.h. das Konditionierungsnetzwerk bzw. die Konditionierungsimpedanzen können dann entfallen.

Vorzugsweise weist, gemäß Patentanspruch 4, das Meßmodul zur Leistungsmessung mindestens drei mit den Phasenleitern verbundene Übertrager und/oder Shunts auf und/oder ein zusätzlicher Übertrager und/oder Shunt auf dem Nulleiter dient zur Überprüfung der Symmetrie (Fehlerströme).

Durch diese Ausgestaltung kann das Meßsystem zur Netzspannungsüberwachung gemäß EN 50160, zur Feststellung und Erfassung von Versorgungsunterbrechungen, Spannungseinbrüchen, Spannungsänderungen, Überspannungen und Oberschwingungen ebenso wie zur Überwachung der Frequenz und Symmetrie der Spannung dienen. Weiterhin kann es als Zähler zur Verrechnung des Stromverbrauchs sowie zur Blindleistungssteuerung als Kompensationsregler, zur Oberschwingungssteuerung oder zur direkten Beeinflussung der Steuerwinkel geregelter Antriebe eingesetzt werden.

Eine Weiterbildung der Erfindung, gemäß Patentanspruch 5, ist gekennzeichnet durch die Einbeziehung von Übertragern zur Leistungsmessung des Meßmoduls in den Entkoppelfilter.

Diese Weiterbildung der Erfindung weist den Vorteil auf, dass bei Verwendung von Übertragern zur Leistungsmessung, die Übertragerinduktivitäten in den Entkoppelfilter mit einbezogen werden und somit Induktivitäten eingespart werden können.

Bei einer bevorzugten Ausgestaltung der Erfindung dient, gemäß Patentanspruch 6, der Entkoppelfilter gleichzeitig zur Netzfilterung für das Stromversorgungsmodul, wobei das Stromversorgungsmodul parallel zu den Impedanzen des Entkoppelfilters zwischen dem Nulleiter und einem der Phasenleiter an das Netz angeschlossen ist.

Diese Ausgestaltung der Erfindung weist den Vorteil auf, dass sowohl Filter eingespart werden können als auch die Separierung von Energieversorgung und hochfrequenten Signalen bewirkt wird. Durch die Stromversorgung hervorgerufene Störungen werden zuverlässig vermieden. Eine ähnliche Anordnung zur Stromversorgung einer Übertragungseinrichtung auf Niederspannungsnetzen ist aus der internationalen Patentanmeldung WO 98/18211 bekannt, ohne dass Filter eingespart wurden. Die Filter können als "differential mode" T- oder LC-(LT) Typen ausgeführt werden. Der Anforderung "ausreichende Induktivität bei später Sättigung" wird folgende Ausführung der induktiven Elemente gerecht: Ein Leitermaterial wird in eine spezielle geometrische Form gebracht und mit einem Gemisch aus Eisenpulver oder Ferritpulver und Epoxydharz umgeben. Die Elementarteilchen des Pulvers besitzen winzige Abstände zueinander, was einer Verteilung eines Luftspaltes im Kernmaterial gleichkommt. Alternativ kann durch das gezielte Einbringen von Luftspalten die Sättigung in den Bereich sehr hoher Stärken des magnetischen Feldes verlagert werden, wodurch ebenfalls die späte Sättigungsneigung erzielt wird. Die geometrische Form des Elementes ist so ausgelegt, dass Induktivität und parasitäre Kapazität in der gewünschten Größenordnung liegen. Der Einbau von Serieninduktivitäten zur Sperrung des Durchgangs hochfrequenter Signale auf das Sammelschienensystem einer Trafostation oder auf das Installationsnetz eines Gebäudes erfolgt in die Strompfade, wobei durch Materialwahl und Ausgestaltung dafür gesorgt wird, dass aufgrund der Lastströme keine Sättigung in dem Maße eintritt, daß die erwünschte Sperrfunktion nennenswert beeinträchtigt wird. Vorzugsweise erfolgt die Positionierung der Serieninduktivitäten in der Nähe der "Kabelwurzeln" in Trafostationen und bei Hausanschlüssen. Die Serieninduktivitäten können dabei in Form von Ringen, Rechtecken oder Zylindern aus magnetischen Materialien wie Ferriten oder nanokristallinen Werkstoffen aufgebaut werden, und der stromtragende Leiter wird durch den Ring, das Rechteck oder den Zylinder geführt oder auch in einer oder mehreren Windungen um den magnetischen Körper geschlungen.

Weiterhin weist, gemäß Patentanspruch 7, das Ankoppelmodul mindestens einen Entkoppelkondensator und mindestens einen Entladewiderstand auf, welche mit dem Phasenleiter verbunden sind.

Diese Ausgestaltung weist den Vorteil auf, dass das Anbringen von Hochfrequenzkurzschlüssen in Form von Kondensatoren auf der Sammelschiene einer Trafostation, vorzugsweise unmittelbar an den Anschlußflanschen der Serieninduktivitäten bzw. auf der Zählerseite eines Hausanschlusses erfolgen kann.

Schließlich ist, nach Patentanspruch 8, in jedem Phasenleiter eine Sicherung liegt und die Konditionierungsimpedanzen sind zwischen den Sicherungen und den Entkoppelkondensatoren oder auch erst hinter den Entkoppelkondensatoren angeordnet.

In der internationalen Patentanmeldung WO 98/33258 ist eine modifizierte Sicherung zur Einkopplung von Kommunikationssignalen und anderer Aufgaben beschrieben. Als "Sicherung" wird dabei jede Art einer "austauschbaren Sicherung" definiert. Im Gegensatz hierzu ist bei der erfindungsgemäßen Ausgestaltung eine Modifikation des Sicherungssockels vorgesehen, indem entweder der bisherige Sockel komplett ausgetauscht wird oder ein festverankerter Adapter benutzt wird. In beiden Fällen ergibt sich der Vorteil, dass die herkömmlichen (und geprüften) Sicherungen ohne Modifikation weiterhin verwendet werden können.

In Weiterbildung der erfindungsgemäßen Vorrichtung nach Patentanspruch 9 ist gemäß Patentanspruch 10 vorgesehen, dass zwischen Mischer und DSP-Modul ein Tiefpass, nachfolgend mindestens eine Dezimationsstufe und nachfolgend ein Zwischenspeicher angeordnet sind.

Diese Weiterbildung der Erfindung weist den Vorteil auf, dass die Abtastrate reduziert und die im Zwischenspeicher enthaltenen Abtastwerte zum DSP-Modul weitergeleitet werden. Dadurch ist es in vorteilhafter Weise nicht notwendig, dass das DSP-Modul eine kontinuierliche Überwachung der einzelnen Abtastwerte durchführen muss, wodurch mehr Rechenkapazität für andere Aufgaben zur Verfügung steht.

Bei einer bevorzugten Ausgestaltung der Erfindung ist, gemäß Patentanspruch 11, der Eingangsverstärker des zweiten Messmoduls als Verstärker mit nichtlinearer Kennlinie ausgestaltet oder mittels eines Multiplexers wird , zwischen zwei Eingangsverstärkern mit unterschiedlicher Kennlinie umgeschaltet.

Diese Ausgestaltung weist den Vorteil auf, dass mit demselben Messmodul Powerline-Signale sowohl mit einer Amplitude im Voltbereich als auch transiente Signale mit einer Amplitude bis zu beispielsweise 6 kV gemessen werden können. In entsprechender vorteilhafter Weise kann mittels des Multiplexer zwischen zwei verschiedenen Verstärkern mit unterschiedlicher Kennlinie umgeschaltet werden und so die Messung in zwei verschiedenen Spannungsbereichen erfolgen.

Vorzugsweise weist, gemäß Patentanspruch' 12, das zweite Messmodul mindestens einen Multiplexer auf, mittels dessen die Eingangssignale direkt dem Analog/Digital-Wandler zugeführt und im Zeitmultiplex-Betrieb verarbeitet werden oder es ist ein zusätzlicher Analog/Digital-Wandler vorgesehen, welchem die Eingangssignale zugeführt werden und welcher mit dem DSP-Modul verbunden ist.

Schließlich sind gemäß Patentanspruch 13 in Reihe liegende weitere Dezimationsfilter vorgesehen und zur Vorverarbeitung werden die Ausgangssignale der Dezimationsfilter jeweils einem mit dem DSP-Modul verbundenen Filter zugeführt.

Diese Ausgestaltung weist den Vorteil auf, dass in den Dezimationsfiltern die Umwandlung des überabgetasteten Signals mit geringer Auflösung in ein Signal mit hoher Auflösung und geringerer Abtastrate erfolgt. Dadurch ist auf einfache Art und Weise die erfindungsgemäße Vorrichtung beispielsweise für den Einsatzbereich Stromzähler geeignet, wo eine relativ hohe Auflösung bei einer gleichzeitig niedrigen Abtastrate benötigt wird.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- Figur 1: einen ersten Aufbau der Vorrichtung zur Durchführung von universellen Messungen und/oder Datenübertragung in elektri- schen Energieverteilnetzen gemäß der Erfindung,
- Figur 2: eine erste Ausgestaltung des Ankoppelmoduls zur HF- Ankopplung über zwei (gegenüberliegende) Phasen und zur dreiphasigen Ankopplung im niederfrequenten Bereich (CENELEC-Band),
- Figur 3: bevorzugte Ausführungsformen für die Impedanzen des Entkoppelfilters,
- Figur 4: eine zweite Ausgestaltung des Ankoppelmoduls und
- Figur 5: eine dritte Ausgestaltung des Ankoppelmoduls gemäß der Erfindung,
- Figur 6: das Blockschaltbild einer zweiten Ausgestaltung der Vorrichtung zur Durchführung von universellen Messungen und/oder Datenübertragung in elektrischen Energieverteilnetzen gemäß der Erfindung
- Figur 7: Einzelheiten der Messmodule zur Transientenmessung Energiemessung und der unteren Bereiche der EEQ-Messung für die Vorrichtung nach Figur 6,
- Figur 8: für den Anwendungsfall Flughafenbefeuerung die Beschaltung des in der Ringschleife angeordneten Verbrauchers (Lampe), sowie
- Figur 9: die zentrale Steuerung hierfür und
- Figur 10: eine Ausgestaltung mit zwei stromkompensierten Drosseln für ein 4-Leiter-System.

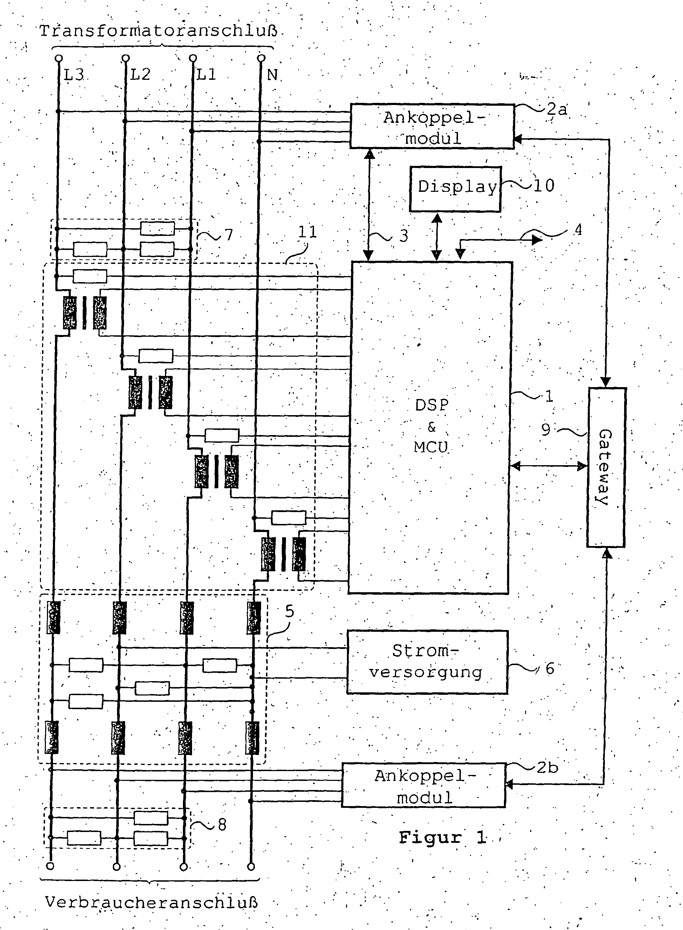

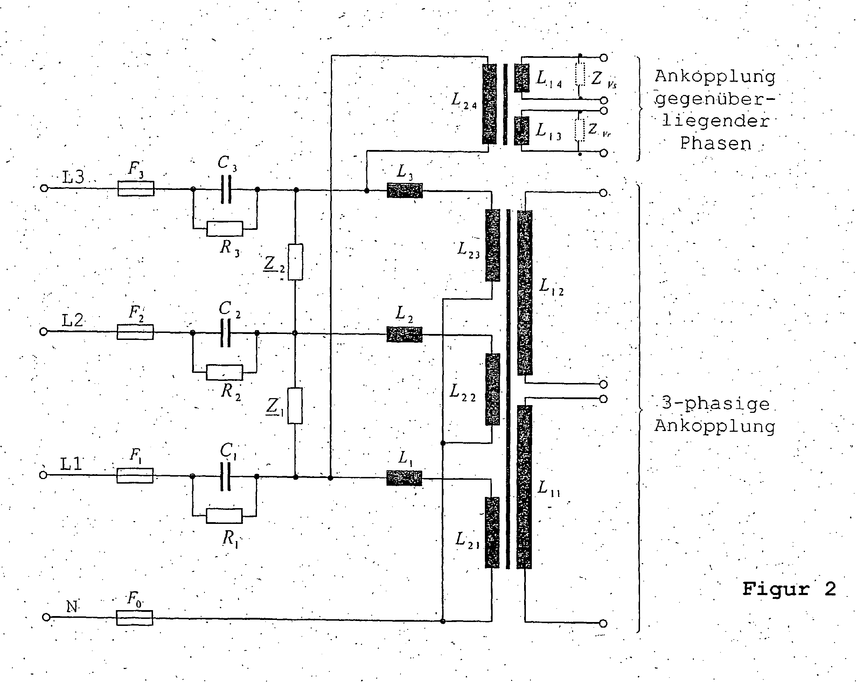

Figur 1 zeigt einen Aufbau der Vorrichtung zur Durchführung von universellen Messungen und/oder Datenübertragung in elektrischen Energieverteilnetzen gemäß der Erfindung. Die Vorrichtung weist hierzu für den niedrigen Frequenzbereich ein mit allen drei Phasenleitern L1, L2, L3 und dem Nulleiter N bzw. für den höheren Frequenzbereich ein mit gegenüberliegenden Phasen L1, L3 verbundenes und sowohl auf der Netzseite als auch auf der Verbraucherseite angeordnetes Ankoppelmodul 2a, 2b auf. Bevorzugte Ausgestaltungen des Ankoppelmoduls 2a, 2b sind in den Figuren 2, 4 und 5 dargestellt.

Weiterhin ist ein Entkoppelfilter 5 mit vier Spulenpaaren und vier zwischen den Leitern L1, L2, L3 und N liegenden Impedanzen (vorzugsweise Kondensatoren) sowie ein sowohl auf der Netzseite als auch auf der Verbraucherseite angeordnetes Konditionierungsnetzwerk 7, 8 mit jeweils einer zwischen zwei Leitern geschalteten Impedanz vorgesehen. Es können auch zwei Spulenpaare anstatt der eingezeichneten vier vorgesehen werden, d.h. auf zwei Leitern entfallen die eingezeichneten Spulenpaare (vorzugsweise auf N und L2, da für die höheren Frequenzen zwischen L1 und L3 übertragen wird). Durch die Benutzung von Entkoppelfilter 5 ist es möglich im Inhouse- und Außerhausbereich die gleichen Frequenzbänder zu verwenden.

Ein Meßmodul 11 mit drei Übertragern zur Leistungsmessung und mit einem Übertrager zur Überprüfung der Symmetrie, ist sowohl mit den Leitern L1, L2, L3 und N als auch mit einem DSP- und MCU-Modul 1 verbunden. Weiterhin sind mit dem DSP- und MCU-Modul 1 das Ankoppelmodul 2a (über die Leitung 3) und eine Anzeigeeinrichtung 10 verbunden. Für das Gesamtmodul ist ein Stromversorgungsmodul 6 vorgesehen, wobei das Stromversorgungsmodul 6 parallel zu den Impedanzen des Entkoppelfilters 5 zwischen dem Nulleiter N und den Phasenleitern L1, L2 oder L3 an das Netz angeschlossen ist. Dabei kann der Entkoppelfilter 5 gleichzeitig zur Netzfilterung für dieses Stromversorgungsmodul 6 verwendet werden. Hierzu wird das Modul parallel zu einer der Impedanzen des Entkoppelfilters 5 zwischen dem Nulleiter N und einen der Phasenleiter L1, L2, oder L3 an das Netz angeschlossen, wobei vorzugsweise der Phasenleiter L2 verwendet wird, um die Symmetrie von den Phasenleitern L1 und L3 gegenüber dem Nulleiter N nicht zu beeinträchtigen. Das Konditionierungsnetzwerk 7, 8 kann auch im Ankoppelmodul 2a, 2b integriert sein, d.h. es enthält bereits die Konditionierung bzw. die Konditionierungsimpedanzen Z₁, Z₂ und ggf. Z₃ (siehe Fig. 2, Fig. 4 und Fig. 5). Dadurch kann das externe Konditionierungsnetzwerk 7, 8 entfallen, was den Vorteil mit sich bringt, dass eine zusätzliche Anbringung dieser Bauelemente zwischen den Leitern wegfällt.

Schließlich ist ein Erweiterungsmodul 9 vorgesehen, welches mit den beiden Ankoppelmoduln 2a, 2b und dem DSP- und MCU-Modul 1 verbunden ist. Das DSP-Modul bearbeitet Übertragungs-, Meß- und Diagnose/Überwachungsaufgaben im Timesharing-Verfahren gemäß ihrer jeweiligen Priorität und das MCU-Modul nimmt die Steuerung der Applikationen vor.

Die Ankopplung kann, wie in Figur 2 gezeigt, 3-phasig oder auf gegenüberliegenden Phasen erfolgen. Hierbei dienen die Kondensatoren C₁, C₂, C₃ zur Entkopplung der hohen, niederfrequenten Versorgungsspannung. Die Induktivitäten L₂₁, L₂₂ bzw. L₂₃ in Verbindung mit den Induktivitäten L₁, L₂ und L₃ sind so dimensioniert, dass diese im höheren Frequenzbereich einem Leerlauf nahekommen und dienen damit der HF-Abschottung der Übertrager für die 3-phasige Ankopplung im niedrigeren Frequenzbereich. Gegebenenfalls kann L₁ mit L₂₁ und L₂ mit L₂₂ usw. zusammengefaßt werden. Weiterhin können die Induktivitäten L₁, L₂ und L₃ auch als bifilare Wicklung um die jeweilige Übertragerspule oder als Ferritummantelung ausgeführt werden.

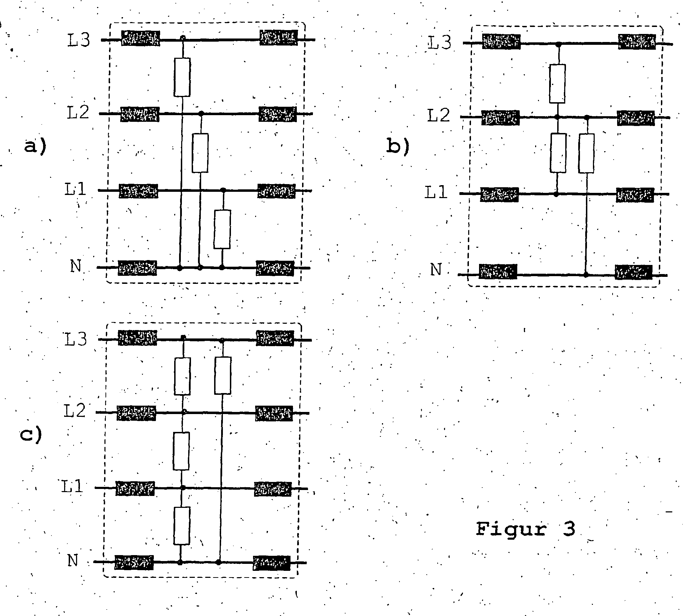

Die Impedanzen des Entkoppelfilters 5, die zwischen den einzelnen Leitern angebracht sind, dienen dazu, diese für HF-Signale kurzzuschließen, und können dazu in verschiedener Weise zwischen den Leitern angebracht werden. Die Abbildungen a, b und c in Figur 3 zeigen hierfür drei weitere (neben der in Figur 1 gezeigten) bevorzugte Ausgestaltungen (auch hier können gegebenenfalls zwei Spulenpaare weggelassen werden) vom Entkoppelfilter 5.

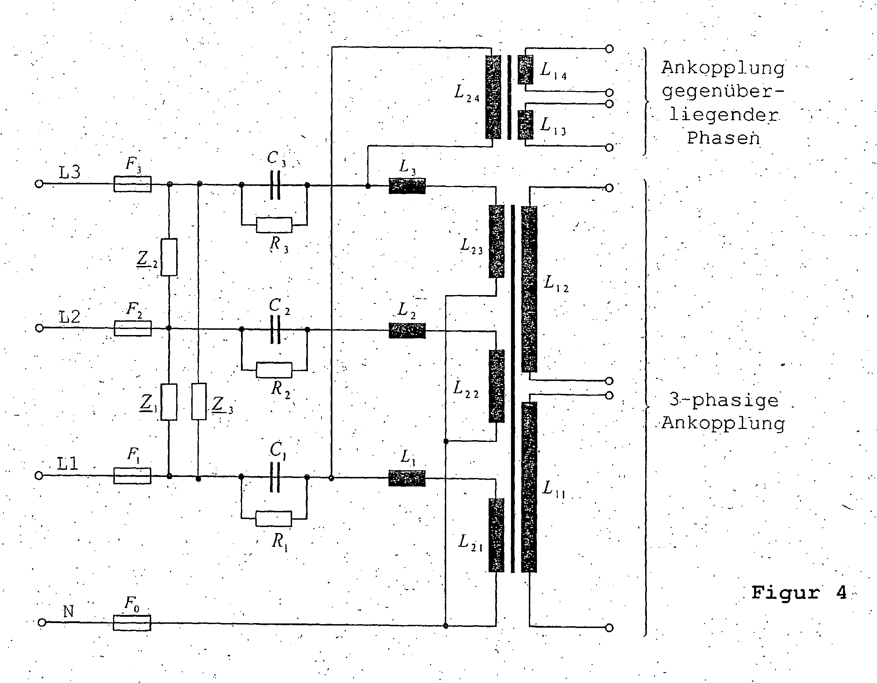

Abhängig davon, welche Entkoppelkondensatoren C₁, C₂, C₃ im Ankoppelmodul 2a, 2b verwendet werden, können die Konditionierungsimpedanzen zwischen den Sicherungen und den Entkoppelkondensatoren C₁, C₂, C₃ (wie in Figur 4) positioniert werden oder auch erst hinter den Entkoppelkondensatoren C₁, C₂, C₃ (wie in Figur 2). Im zweiten Fall (Figur 2) kann dabei auf die Konditionierungsimpedanz Z₃ verzichtet werden, da bereits die Verstärkerimpedanz von der Primärseite auf die Sekundärseite transformiert wird, was durch die beiden Impedanzen Zᵥₛ und Zᵥᵣ (in Figur 2 strichliniert eingezeichnet) angedeutet werden soll.

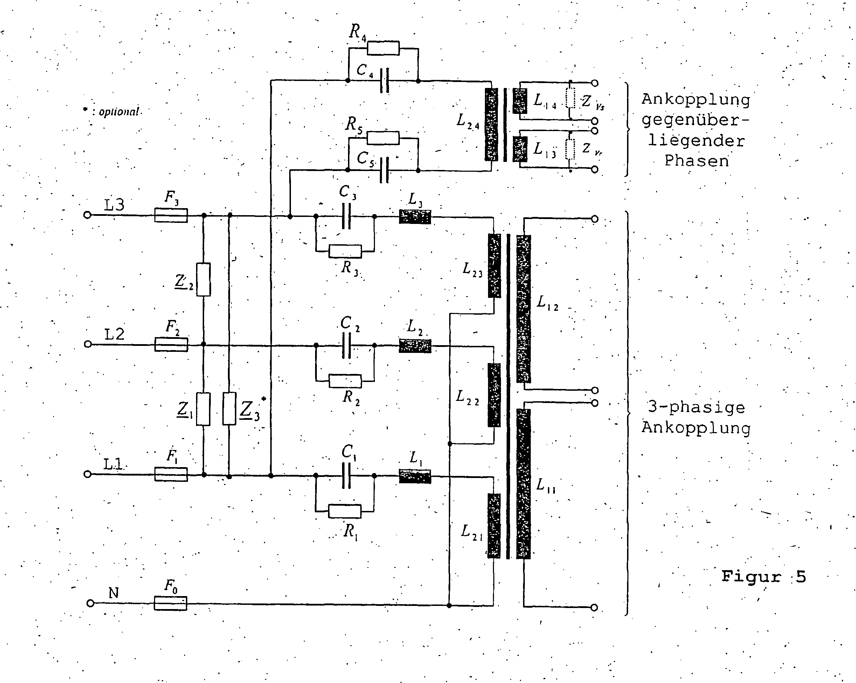

Figur 5 zeigt eine weitere Variante für das Ankoppelmodul 2a, 2b für den Fall, dass die Entkoppelkondensatoren C₁, C₂, C₃ nicht HF-tauglich sind. Deshalb zweigt der HF-Pfad hier direkt hinter den Konditionierungsimpedanzen Z₁, ..., Z₃ ab und enthält separate, HF-taugliche Kondensatoren C₄ und C₅, sowie die zusätzlichen Entladewiderstände R4 und R5. Die Konditionierungsimpedanz Z₃ kann hier (analog zu Figur 2) auch entfallen, da auch hier bereits die Verstärkerimpedanz von der Primärseite des Übertragers auf die Sekundärseite transformiert wird, was durch die beiden Impedanzen Zᵥₛ und Zᵥᵣ angedeutet werden soll.

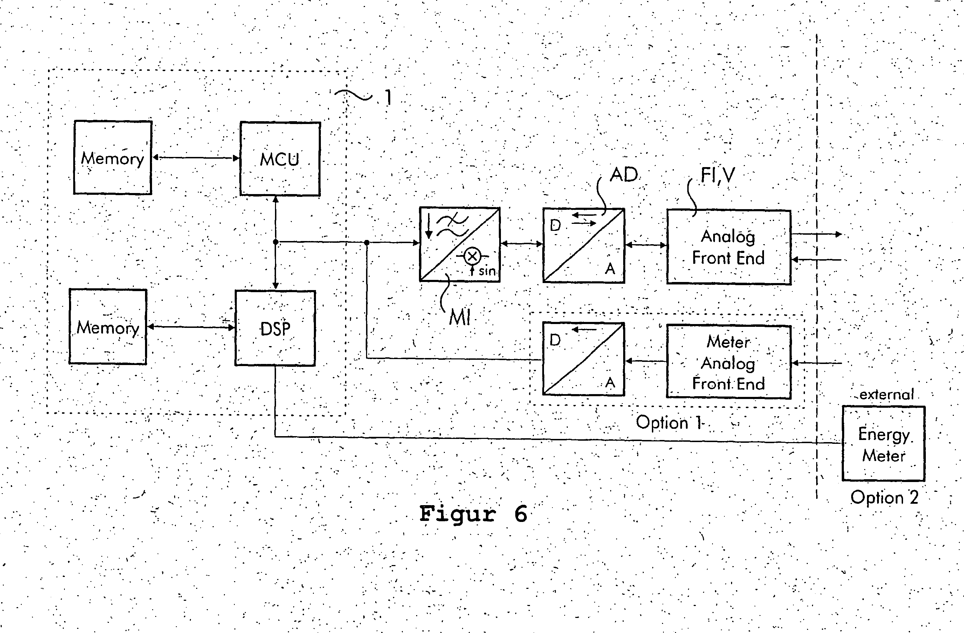

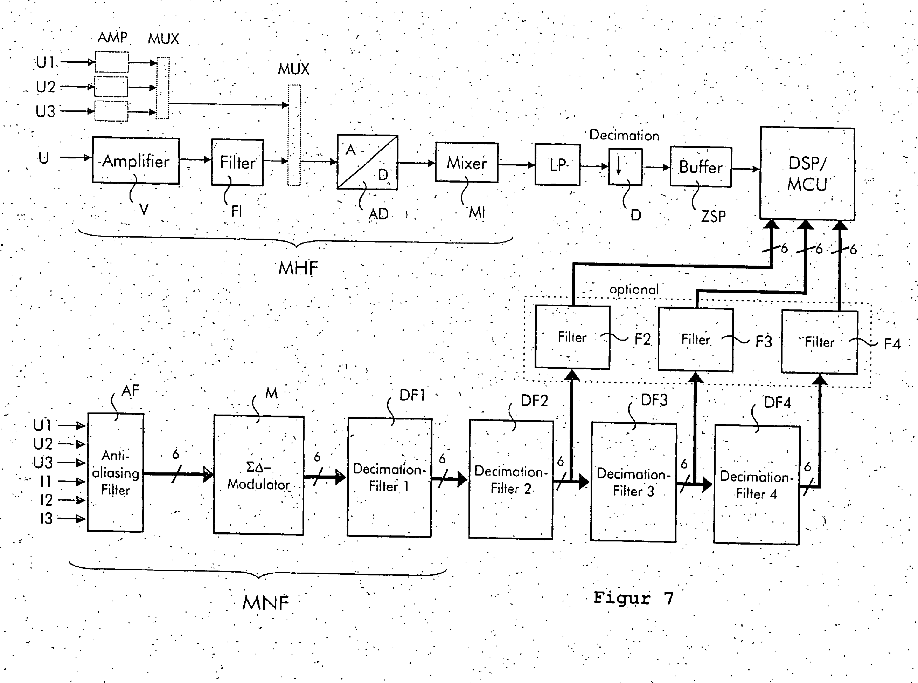

Figur 6 zeigt das Blockschaltbild einer zweiten Ausgestaltung der Vorrichtung zur Durchführung von universellen Messungen und/oder Datenübertragung in elektrischen Energieverteilnetzen gemäß der Erfindung. Bei der in Figur 6 dargestellten Ausgestaltung umfasst das DSP- und MCU-Modul 1 (mit DSP und MCU) auch verschiedene Puffer und Programmspeicher. Die Abtastwerte für die Transientenanalyse werden über den analogen Empfangspfad, der sonst für die Datenübertragung über das Stromnetz benutzt wird, erfasst und über ein Analog Front End (mit Hochpass HP, Tiefpass LP und Verstärker V1; siehe Figur 7), einem Analog-Digital-Wandler AD, einem Mischer MI sowie weiterer nur symbolisch angedeuteter Einrichtungen (dem Tiefpass TP, der Dezimations-Stufe D und dem Zwischenspeicher ZSP; siehe Figur 7) dem DSP- und MCU-Modul 1 zugeführt. Die abgetasteten Messdaten für den Energiezähler können von einem externen Zählerchip (Option 2) geliefert und im DSP- und MCU-Modul 1 verarbeitet werden. Zusätzlich liefert der Energiezähler die Eingangswerte für die beiden unteren Analyse-Bereiche der EEQ-Messungen (z.B. 50 Hz bis 2000 Hz und 2000 Hz bis 9000 Hz). Diese Werte werden ebenfalls im DSP- und MCU-Modul 1 verarbeitet.

Durch die zusätzliche Realisierung eines weiteren Messkanals (Option 1) kann eine Eigenstrommessung des Kompensationsreglers durchgeführt werden. Hierdurch kann die Funktion des Reglers überprüft werden und der Arbeitspunkt bestimmt werden. Weiterhin kann der Zustand des Netzknotens und die Stabilität überwacht werden. Daneben bestehen beim Einsatz des Energiezählers die Möglichkeiten:
a) Einsatz eines externen Zählerchips (Option 2 in Figur 6),
b) Einsatz eines Meter Analog Front End mit AD-Wandlern (Option 1 in Figur 6),
c) Erweiterung von b) durch zusätzliche Messkanäle (Option 1 in Figur 6).

Figur 7 zeigt Einzelheiten der Messmodule MNF und MHF zur Transientenmessung, Energiemessung und der unteren Bereiche der EEQ-Messung für die Vorrichtung nach Figur 6. Für die Energiemessung und Messung im niedrigen Frequenzbereich ist ein mit allen drei Phasenleitern L1, L2, L3 und dem Nulleiter N verbindbares und auf der Netzseite angeordnetes erstes Messmodul MNF vorgesehen. Das Messmodul MNF besteht aus Antialiasingfilter AF, einen mit diesem verbundenen ΣΔ-Modulator M und mindestens einem mit diesem verbundenen Dezimationsfilter DF1. Die Realisierung mehrerer Kanäle kann im Zeitmultiplex oder durch eine parallele Anordnung für den ΣΔ-Modulator M und dem Dezimationsfilter DF1 erfolgen.

Für die Transientenanalyse im höheren Frequenzbereich ist ein mit allen drei Phasenleitern L1, L2, L3 und dem Nulleiter N verbindbares und auf der Netzseite angeordnetes zweites Messmodul MHF vorgesehen. Das zweite Messmodul MHF besteht aus mindestens einem Eingangsverstärker V (vorzugsweise mit variabler Verstärkung), einem mit diesem verbundenen Filter FI und einem Analog/Digital-Wandler AD mit nachgeordnetem Mischer MI. Alternativ (in Figur 7 nicht dargestellt) besteht das Filter FI aus einem Hochpass und einem Tiefpass, welche zwischen in Reihe liegenden Verstärkern angeordnet sind. Diese Verstärker sind vorzugsweise über eine Verstärkersteuerung einstellbar, welche mit dem DSP-Modul DSP verbunden ist.

Für die Transientenanalyse wird der Empfangspfad benutzt, der im analogen Bereich aus Filter FI, Verstärker V sowie dem Analog/Digital-Wandler AD besteht. Die Frequenzen, die vom Analog/Digital-Wandler AD erfasst werden können, werden durch die Grenzfrequenzen des Filters FI begrenzt. Die vom Analog/Digital-Wandler AD erzeugten Werte, durchlaufen den für die Datenübertragung notwendigen Mischer MI (so konfiguriert, dass keine Veränderung des Signals erfolgt). Durch den nachfolgenden Tiefpass LP und die nachfolgende Dezimations-Stufe D wird die Abtastrate reduziert und die im Zwischenspeicher ZSP gepufferten Daten werden dann an das DSP-Modul DSP geleitet. Hier erfolgen dann die für die Transientenanalyse nötigen Berechnungen.

Die Schaltung zur Erzeugung der Abtastwerte für die Energiemessüng und die unteren beiden Bereiche der EEQ-Messung besteht aus Antialiasingfilter AF, ΣΔ-Modulator M, Dezimationsfiltern DF1 bis DF4, und evtl. zusätzlichen Filtern F2, F3 und F4 zur Vorverarbeitung. Der ΣΔ-Modulator M tastet das analoge Eingangssignal I1 bis I3 bzw. U1 bis U3 mit einer sehr viel höheren Frequenz ab, als nach dem Abtasttheorem notwendig wäre. Mit dem ΣΔ-Modulator M wird das analoge Eingangssignal in eine digitales Signal mit geringer Auflösung gewandelt. Hierbei wird die Technik des "noise shaping" angewandt, wodurch das Quantisierungsrauschen zu größeren Frequenzen hin verschoben wird. Somit entfällt möglichst wenig Leistung des Quantisierungsrauschens auf den eigentlichen Signalfrequenzbereich. In den Dezimationsfiltern DF1 bis DF4 erfolgt die Umwandlung des überabgetasteten Signals mit geringer Auflösung in ein Signal mit hoher Auflösung und geringerer Abtastrate.

Für den Einsatzbereich als Stromzähler wird eine relativ hohe Auflösung bei einer gleichzeitig niedrigen Abtastrate benötigt. Hierfür ist der ΣΔ-Modulator M vorzugsweise vorgesehen.

Der relevante Frequenzbereich der Eingangssignale I1 bis I3 bzw. U1 bis U3 (Messwerte) liegt im Bereich von wenigen kHz. Um zu vermeiden, dass hochfrequente Anteile im Eingangssignal I1 bis I3 bzw. U1 bis U3 durch die Abtastung in den interessierenden Bereich gefaltet werden, ist der Einsatz des Antialiasing-Filters AF notwendig. Die Abtastrate der ΣΔ-Modulatoren M ist sehr viel größer als die Bandbreite der Eingangssignale I1 bis I3 bzw. U 1 bis U3. Daher genügt meist ein relativ einfaches Antialiasing-Filters AF, um eine ausreichend große Dämpfung (mind. 40-50 dB) im Bereich der Abtastrate der Modulatoren (f_{mod}-f_{sig}) zu erhalten und somit Störungen im Nutzbandbereich, hervorgerufen durch die Abtastung, zu vermeiden. Um das Quantisierungsrauschen der ΣΔ-Modulatoren M zu reduzieren und um eine nachfolgende Unterabtastung (Verringerung der Abtastrate) zu ermöglichen, erfolgt anschließend eine Filterung durch das Dezimationsfilter DF1. Um unterschiedliche Abtastraten für die verschiedenen Messbereiche zu erhalten, erfolgt durch die Dezimationsfilter DF2 bis DF4 eine Aufspaltung des Signalpfades. Hierbei durchläuft das digitale Signal am Ausgang des ΣΔ-Modulators M nach dem ersten Dezimationsfilter DF1 unterschiedlich viele weitere Dezimationsfilter DF2, DF3 und DF4 und steht dann anschließend mit unterschiedlichen Faktoren unterabgetastet zur Verfügung. Hierdurch werden digitale Signale mit unterschiedlichen effektiven Abtastraten des Eingangssignals I1 bis I3 bzw. U1 bis U3 erzeugt. Die digitalen Messgrößen für Strom und Spannung können dann noch optional zur Vorverarbeitung in F2 bis F4 gefiltert und dann dem DSP-Modul DSP zur weiteren Verarbeitung übergeben werden. Dort erfolgen die weiteren Auswertungen.

Die erzeugten Daten und Werte können dann über das Stromnetz zu einem zentralen Steuer- und Verarbeitungssystem transportiert und dort ausgewertet werden. Somit ist dann z.B. die Kontrolle bzw. Steuerung der Energiequalität und/oder die Energieverrechnung möglich.

Um mit dem selben Schaltungspfad PowerLine-Signale mit einer Amplitude im Voltbereich und transiente Signale mit einer Amplitude bis zu 6 kV messen zu können, wird am Eingang des Messmoduls MHF ein Verstärker mit nichtlinearer Kennlinie V eingesetzt ("geknickte" oder logarithmische Kennlinie). Hierdurch kann der große Amplitudenbereich der Eingangssignale abgedeckt werden.

Um den Einsatz eines solchen Verstärkers mit nichtlinearer Kennlinie V im PowerLine-Übertragungsbetrieb zu vermeiden, kann durch einen externen Multiplexer zwischen zwei verschiedenen Verstärkern mit unterschiedlicher Kennlinie umgeschaltet werden und so die Messung in zwei verschiedenen Spannungsbereichen erfolgen (in der Zeichnung nicht dargestellt). Mittels Multiplexer MUX kann im zweiten Messmodul MHF zwischen den Eingangssignalen U1, U2, U3 umgeschaltet werden, wie dies in Figur 7 im oberen Pfad von MHF angedeutet ist (beispielsweise Eingangssignal U1, Verstärker AMP und Multiplexer MUX).

Evtl. können bei der Transientenanalyse andere oder keine Filter sinnvoll sein. (Beim Einsatz eines Verstärkers mit nichtlinearer Kennlinie V muss das AntiAliasing-Filter im Messmodul MHF geeignet positioniert werden, um die ansonsten auftretenden nichtlinearen Verzerrungen bei der Filterung zu vermeiden.)

Der für die Datenübertragung notwendige Mischer MI wird so konfiguriert, dass keine Veränderung des Signals erfolgt und am Ausgang das reelle Eingangssignal anliegt, das dann im Bedarfsfall im DSP-Modul DSP durch entsprechende Algorithmen ausgewertet wird.

Durch eine entsprechend Ausgestaltung können die Transienten erkannt (Maximalwert, Flankensteilheit) und dann die vorher in einem Puffer (Zwischenspeicher ZSP) geschriebenen Abtastwerte zum DSP-Modul DSP zur Analyse weitergeleitet werden. Das DSP-Modul DSP muss somit keine kontinuierliche Überwachung der einzelnen Abtastwerte durchführen, wird also entlastet und stellt mehr Rechenkapazität für andere Aufgaben (z.B. PowerLine-Übertragung) zur Verfügung. Zusätzlich zu den in Figur 6 und Figur 7 dargestellten Eingangsgrößen kann auch eine Messung des Stroms im Nulleiter erfolgen. Weiterhin kann in einem 5-Leiter-System auch die Spannung im Nulleiter gemessen werden.

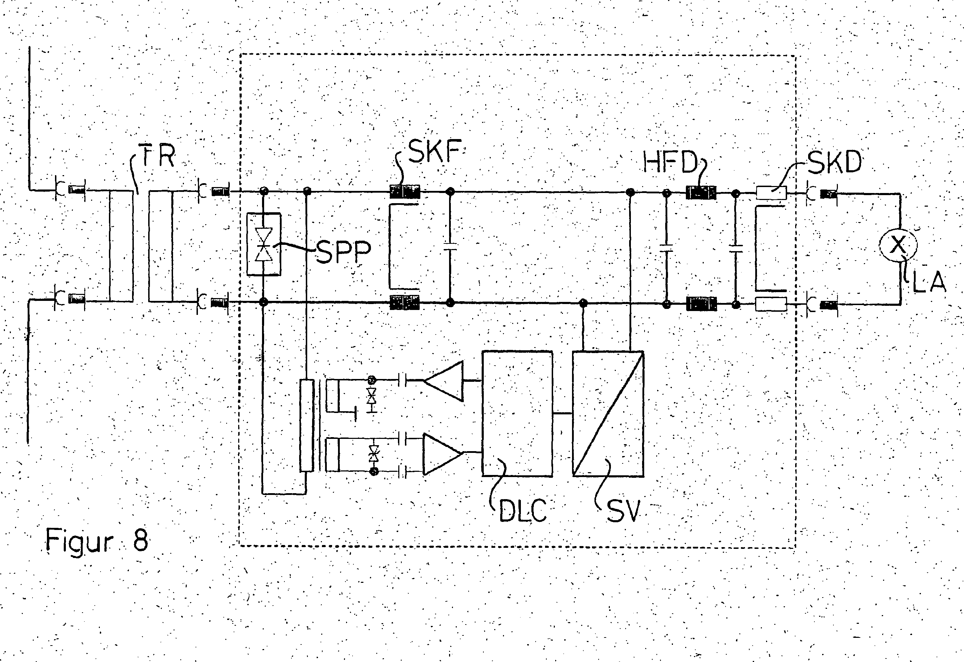

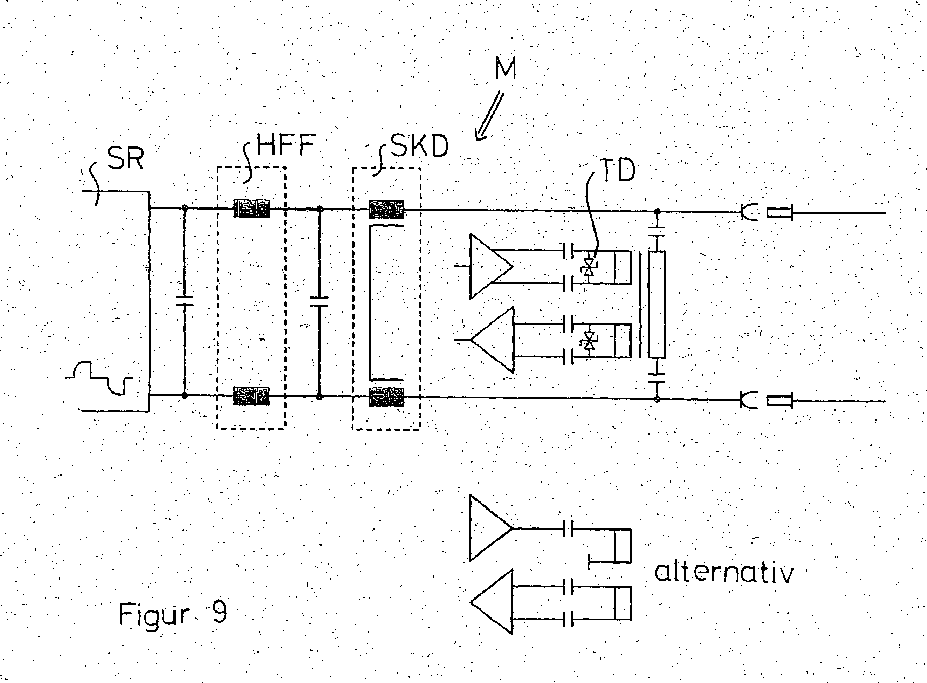

Figur 8 zeigt - für den Anwendungsfall Flughafenbefeuerung - die Beschaltung des in der Ringschleife angeordneten Verbrauchers (Lampe) LA, sowie Figur 9 Einzelheiten der zentralen Steuerung M hierfür. Die Verbraucher LA sind jeweils an die Ringschleife über einen Trenntrafo TR angekoppelt, wobei die Ringschleife beim letzten Verbraucher LA geschlossen wird. Somit erfolgt die Kommunikation bzw. Ansteuerung des letzten Verbrauchers LA über mehrere Trenntransformatoren TR hinweg. Die Helligkeit der Lampe LA wird durch einen im Master M angeordneten Stromregler SR (vorzugsweise Phasenanschnittsteuerung) eingestellt. Da die Lampe LA nur einen geringen Widerstand (quasi einen Kurzschluss darstellt) aufweist, ist zwischen Stromversorgung SV (für das DSP-Modul DSP) und Lampe LA eine HF-Drossel HFD oder eine stromkompensierte Drossel SKD angeordnet, wodurch eine vorgebbare Impedanz realisiert werden kann. Die zweite wichtige Funktion von HFD bzw. SKD liegt in der entsprechenden Filterung; dementsprechend ist auch zwischen Stromversorgung SV und Trenntrafo TR ein stromkompensiertes Filter (bzw. Drossel) SKF angeordnet. Die Signaleinkopplung am DSP-Modul DSP erfolgt wie oben stehend beschrieben. Schließlich werden Spannungsspitzen im Netz mittels einer Schutzschaltung SPP geglättet/kompensiert, welche zwischen Signaleinkopplung (in Figur 8 ist die Signaleinkopplung gegen N-Leiter dargestellt) und Trenntrafo TR angeordnet ist.

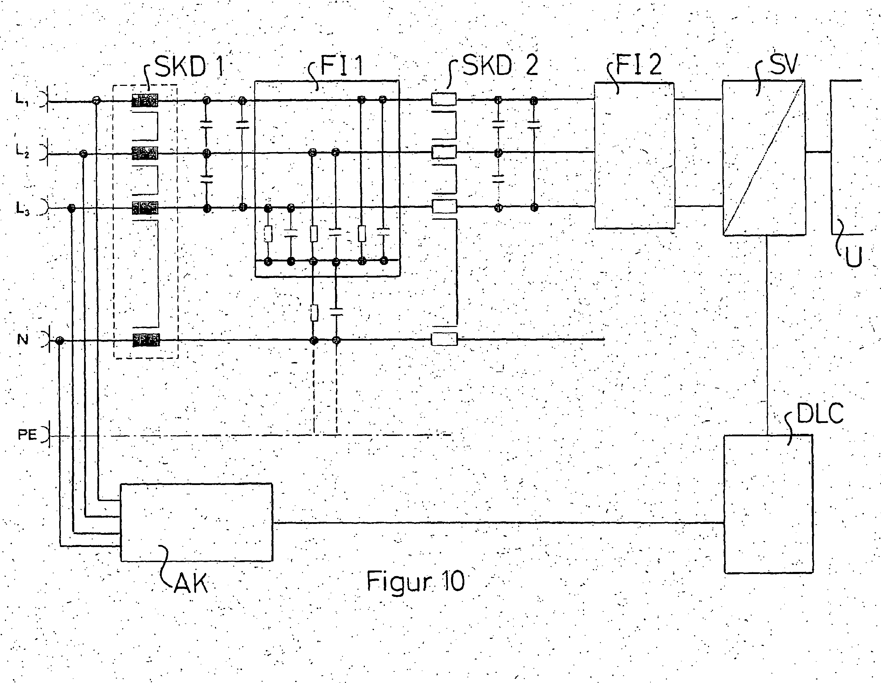

Ist wie in Figur 9 dargestellt, zwischen SKD und Stromregler SR ein HF-Filter HFF angeordnet, so sind HFF und SKD miteinander vertauschbar. Weiterhin ist in Figur 10 neben der differentiellen Einkopplung (wobei dort optional Transil-Dioden TD vorgesehen sind) auch als Alternative die Einkopplung gegen N-Leiter dargestellt.

Schließlich zeigt Figur 10 eine Ausgestaltung mit zwei stromkompensierten Drosseln SKD1, SKD2 für ein 4-Leiter-System. Die Drossel SKD1 dient als Impedanz im DLC-System und die Drossel SKD2 dient zur Unterdrückung von Störungen aus der Stromversorgung SV. An diese Stromversorgung SV ist der DLC-Controller DLC und beispielsweise als Verbraucher ein Umrichter U angeschlossen. Der DLC-Controller ist ein-/dreiphasig an alle drei Phasenleiter L1, L2, L3 und dem PEN-Leiter angekoppelt. Schließlich ist zwischen den beiden Drosseln SKD1, SKD2 zur verbesserten HF- und Rauschentkopplung ein Filter FI1 (damit die Sendeleistung nicht durch Filterkondensatoren abgeleitet wird, welche die Sendesignale kurzschließen würden) bzw. optional zwischen Drossel SKD2 und Stromversorgung SV ein zweites Filter FI2 (Entkopplung der Störungen) angeordnet.

Im Vergleich zum bekannten Stand der Technik vereint die erfindungsgemäße Vorrichtung die Funktionen zur Kommunikation, Netzkontrolle, Netzanalyse, Meßfunktion (z.B. auch zur Messung von Fehlerstrom oder Fehlerspannung) und Blindleistungssteuerung sowie Schutzfunktion (z.B. Motorschutz) in sich. Das Gesamtmodul ist damit kosteneffizient und vereint Kommunikation und Netzkontrolle in einem System, ermöglicht eine geringe Bauteilgröße und damit eine einfache Montage und die Integrierbarkeit am Zähler des Hausanschlusses sowie an der Trafostation, berücksichtigt die Netzsymmetrie und bietet die Möglichkeit zur Erweiterung.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann über eine PC-Schnittstelle (siehe Fig. 1; Bezugszeichen 4) eine Fernabfrage bzw. -kontrolle der Messdaten und Datenübertragung mit dem DSP-Modul als transceiver erfolgen, kann die Aktivierung der Anzeigeeinrichtung zur Anzeige von Daten durch einen Bewegungssensor, Tastendruck oder Änderung des Umgebungslichts erfolgen, kann das Ankoppelmodul mit Konditionierungsnetzwerk ausgestaltet sein, kann die nichtlineare Verstärkung digital kompensiert werden, können durch den Einsatz von Multiplexern die Eingangssignale direkt zum A/D-Wandler gelangen und im Zeitmultiplex-Betrieb verarbeitet werden, kann alternativ ein zusätzlicher (externer oder interner) A/D-Wandler vorgesehen werden, der im Zeitmultiplex-Betrieb eine Wandlung der Eingangsgrößen durchführt und wobei die Daten über einen zusätzlichen Kanal zum DSP-Modul gelangen, die Anzahl der Dezimationsfilter ist variabel und kann auch mehr als die in Figur 4 dargestellten vier Dezimationsfilter umfassen; das Filter FI kann aus einem Hochpass und einem Tiefpass bestehen; über eine Verstärkerregelung kann beim Eingangsverstärker V und/oder weiteren in der Kette geschalteter Verstärkter die Verstärkung eingestellt werden u.a

## Patentansprüche

1. Vorrichtung zur Durchführung sowohl von Messungen als auch von Datenübertragung in elektrischen Energieverteilnetzen, welche hierzu aufweist:
a) für den niedrigen Frequenzbereich bis einigen KHz mindestens ein mit allen drei Phasenleitern (L1, L2, L3) und dem Nulleiter (N) und/oder für den höheren Frequenzbereich ein mit im 4-Segment-Kabel gegenüberliegenden Phasenleitern (L1, L3) verbundenes und auf der Netzseite angeordnetes Ankoppelmodul (2a),
b) ein Entkoppelfilter (5) mit mindestens zwei Paaren von in den Längspfad der Leiter (L1, L2, L3, N) integrierten Spulen sowie mindestens drei zwischen die Leiter (L1, L2, L3, N) geschalteten Impedanzen,
c) ein sowohl auf der Netzseite als auch auf der Verbraucherseite angeordnetes Konditionierungsnetzwerk (7, 8), bestehend aus mindestens einer zwischen zwei Leitern geschalteten Impedanz,
d) ein Messmodul (11) mit mindestens einem Shunt oder Übertrager, welcher mit mindestens einem Leiter (L1) verbunden ist,
e) ein mit dem Meßmodul (11) und mit mindestens einem Ankoppelmodul (2a) verbundenes DSP- und MCU-Modul (1) und
f) eine mit dem DSP- und MCU-Modul (1) in Verbindung stehende Anzeigeeinrichtung (10) sowie ein Stromversorgungsmodul (6),
g) so dass das DSP-Modul (DSP) Übertragungs-, Mess- und Überwachungsaufgaben im Timesharing-Verfahren gemäß ihrer jeweiligen Priorität bearbeitet und das MCU-Modul (MCU) die Steuerung des DSP-Moduls (DSP) und die Auswertung der vom DSP-Modul (DSP) gelieferten Daten vornimmt.

2. Vorrichtung nach Anspruch 1, **dadurch gekennzeichnet, dass** das Konditionierungsnetzwerk (7, 8) aus drei jeweils zwischen zwei Phasenleitern (L1-L2, L2-L3 und L1-L3) geschalteten Impedanzen (Z₁, Z₂, Z₃) besteht, welche eine Reihenschaltung aus einem Widerstand und einem Kondensator aufweisen.

3. Vorrichtung nach Anspruch 1, **dadurch gekennzeichnet, dass** ein Erweiterungsmodul (9) vorgesehen ist, welches mit zwei sowohl auf der Netzseite als auch auf der Verbraucherseite angeordneten Ankoppelmoduln (2a, 2b) und dem DSP- und MCU-Modul (1) verbunden ist.

4. Vorrichtung nach Anspruch 1, **dadurch gekennzeichnet, dass** das Messmodul (11) zur Leistungsmessung mindestens drei mit den Phasenleitern (L1, L2 und L3) verbundene Übertrager und/oder Shunts aufweist und/oder dass ein zusätzlicher Übertrager und/oder Shunt auf dem Nulleiter (N) zur Überprüfung der Symmetrie (Fehlerströme) dient.

5. Vorrichtung nach Anspruch 1 oder 4, **gekennzeichnet durch** die Einbeziehung von Übertragern zur Leistungsmessung des Messmoduls (11) in den Entkoppelfilter (5).

6. Vorrichtung nach Anspruch 1, **dadurch gekennzeichnet, dass** der Entkoppelfilter (5) gleichzeitig zur Netzfilterung für das Stromversorgungsmodul (6) dient, wobei das Stromversorgungsmodul (6) parallel zu den Impedanzen des Entkoppelfilters (5) zwischen dem Nulleiter (N) und einem der Phasenleiter (L1, L2 oder L3) an das Netz angeschlossen ist.

7. Vorrichtung nach Anspruch 1, **dadurch gekennzeichnet, dass** das Ankoppelmodul (2a, 2b) mindestens einen Entkoppelkondensator (C₁, C₂, C₃) und mindestens einen Entladewiderstand (R1, R2, R3) aufweist, welche mit den Phasenleiter (L1, L2 oder L3) verbunden sind

8. Vorrichtung nach Anspruch 7, **dadurch gekennzeichnet, dass** in jedem Phasenleiter (L1, L2 oder L3) eine Sicherung (F1, F2, F3) liegt und dass die Konditionierungsimpedanzen (Z₁, Z₂, Z₃) zwischen den Sicherungen (F1, F2, F3) und den Entkoppelkondensatoren (C₁, C₂, C₃) (wie in Figur 4) oder auch erst hinter den Entkoppelkondensatoren (C₁, C₂, C₃) (wie in Figur 2) angeordnet sind.

9. Verfahren zur Durchführung sowohl von Messungen als auch von Datenübertragung in elektrischen Energieverteilnetzen, bei dem:
a) für die Energiemessung und Messung im niedrigen Frequenzbereich bis einigen KHz ein mit allen drei Phasenleitern (L1, L2, L3) und dem Nulleiter (N) verbindbares und auf der Netzseite angeordnetes erstes Messmodul (MNF), bestehend aus Antialiasingfilter (AF), einen mit diesem verbundenen ΣΔ-Modulator (M) und mindestens einem mit diesem verbundenen Dezimationsfilter (DF1) vorgesehen ist,
b) für die Transientenanalyse im höheren Frequenzbereich ein mit allen drei Phasenleitern (L1, L2, L3) und dem Nulleiter (N) verbindbares und auf der Netzseite angeordnetes zweites Messmodul (MHF), bestehend aus mindestens einem Eingangsverstärker (V), einem mit diesem verbundenen Filter (FI) und einem Analog/Digital-Wandler (AD) mit nachgeordnetem Mischer (MI) vorgesehen ist und
c) mit den beiden Messmoduln (MNF, MHF) ein DSP- und MCU-Modul (1) derart in Verbindung steht,
d) so dass das DSP-Modul (DSP) Übertragungs-, Mess- und Überwachungsaufgaben im Timesharing-Verfahren gemäß ihrer jeweiligen Priorität bearbeitet und das MCU-Modul (MCU) die Steuerung des DSP-Moduls (DSP) und die Auswertung der vom DSP-Modul (DSP) gelieferten Daten vornimmt.

10. Verfahren nach Anspruch 9, **dadurch gekennzeichnet, dass** zwischen Mischer (MI) und DSP-Modul (DSP) eine Tiefpass-Verarbeitung (LP), nachfolgend mindestens eine Dezimationsstufe (D) und nachfolgend ein Zwischenspeicher (ZSP) durchgeführt wird.

11. Verfahren nach Anspruch 9, **dadurch gekennzeichnet, dass** der Eingangsverstärker (V) des zweiten Messmoduls (MHF) als Verstärker mit nichtlinearer Kennlinie ausgestaltet ist oder dass mittels eines Multiplexers zwischen zwei Eingangsverstärkern mit unterschiedlicher Kennlinie umgeschaltet wird.

12. Verfahren nach Anspruch 9, **dadurch gekennzeichnet, dass** das zweite Messmodul (MHF) mindestens einen Multiplexer (MUX) aufweist, mittels dessen die Eingangssignale (U1, U2, U3) direkt dem Analog/Digital-Wandler (AD) zugeführt und im Zeitmultiplex-Betrieb verarbeitet werden oder dass ein zusätzlicher Analog/Digital-Wandler vorgesehen ist, welchem die Eingangssignale (U1, U2, U3) zugeführt werden und welcher mit dem DSP-Modul (DSP) verbunden ist.

13. Verfahren nach Anspruch 9, **dadurch gekennzeichnet, dass** in Reihe liegende weitere Dezimationsfilter (DF2, DF3 und DF4) vorgesehen sind und dass zur Vorverarbeitung die Ausgangssignale der Dezimationsfilter (DF2, DF3 und DF4) jeweils einem mit dem DSP-Modul (DSP) verbundenen Filter (F2, F3 und F4) zugeführt werden.

14. Verfahren nach Anspruch 9, **dadurch gekennzeichnet, dass** in einer Ringschleife angeordnete Verbraucher (LA) an die Ringschleife über einen Trenntrafo (TR) angekoppelt sind und dass zwischen einer Stromversorgung (SV) für das DSP-Modul (DSP) und Verbraucher (LA) eine HF-Drossel (HFD) oder eine stromkompensierte Drossel (SKD) angeordnet ist, wodurch sowohl eine vorgebbare Impedanz als auch eine Filterung realisiert werden kann.

15. Vorrichtung nach Anspruch 3, **dadurch gekennzeichnet**, das das Erweiterungsmodul (9) als Kommunikations-Gateway zwischen Außer- und Innerhausbereich ausgestaltet ist, über welches Daten und Werte von und zu einem zentralen Steuer- und Verarbeitungssystem transportiert und dort ausgewertet werden können, so dass die Kontrolle bzw Steuerung der Energiequalitat und/oder die Energieverrechnung ermöglicht wird.

16. Vorrichtung nach Anspruch 1, **dadurch gekennzeichnet, dass** das DSP-Modul (1) eine PC-Schnittstelle (4) aufweist, über welche eine Fernabfrage bzw. -kontrolle der Messdaten und Datenübertragung mit dem DSP-Modul als Transceiver erfolgen kann.

17. Vorrichtung nach Anspruch 1, **gekennzeichnet durch** die Integration im Zahler des Hausanschlusses und/oder in der Trafostation.

## Claims

1. An apparatus for carrying out both measurements and data transmission m electric power distribution networks, for this comprising
a) at least one coupling module (2a) for the low frequency range up to several kHz connected to all three phase lines (L1, L2, L3) and null line (N) and / or for the higher frequency range connected to phase lines (L1 L3) opposite each other of the 4-segment cable both arranged on the mains side,
b) a decoupling filter(5) with at least two pairs coils integrated m the longitudinal path of the lines (L1, L2, L3, N) and at least three impedances connected between the lines (L1, L2, L3, N),
c) a conditioning network (7, 8) arranged both on network side and on the consumer side, comprising at least one impedance connected between two lines,
d) a measurement module (11) comprising at least one shunt or transformer, which is at least connected to one line (L1),
e) a DSP- and MCU-module (1) connected to said measurement module (11) and with at least one coupling module (2a) and
f) a display device (10) connected with said DSP- and MCU-module (1) and a power supply module (6),
wherein the DSP-module (DSP) processes transmission, measurement and monitoring tasks by a timesharing method according to their priorities and the MCU-module (MCU) controls the DSP-module (DSP) and evaluation of the data provided by the DSP-module (DSP)

2. The apparatus of claim 1, wherein said conditioning network (7, 8) comprises three impedances (Z1, Z2, Z3) each arranged between two phase lines (L1-L2, L2, L3 and L1-L3), said impedances (Z1, Z2, Z3) consists m series of a resistor and a capacitor

3. The apparatus of claim 1, wherein an expansion module (9) is provided which is connected to two coupling modules (2a, 2b), both arranged on the network side and on the consumer side and connected to said DSP- and MCU-module (1)

4. The apparatus of claim 1, wherein for performance measurement the measurement module (11) comprises at least three transformer and / or shunts connected to said phase lines (L1, L2 and L3) and / or that an additional transformer and / or shunt is connected to the null line (N) and is used for checking the symmetry (fault currents)

5. The apparatus of claim 1 or 4, **characterized by** the inclusion of transformers for power measurements by the measurement module (11) m said decoupling filter (5)

6. The apparatus of claim 1, wherein said decoupling filter (5) also is used as mains filtering for the power supply module (6), whereby the power supply module (6) is connected m parallel to the impedance of the decoupling filter (5) between the null line (N) and the phase line (L1, L2 or L3) of the network

7. The apparatus of claim 1, wherein the coupling module (2a, 2b) comprises at least a decoupling capacitor (C1, C2, C3) and at least a discharge resistor (R1, R2, R3), which are connected to the phase lines (L1, L2 or L3)

8. The apparatus of claim 7, wherein a fuse (F1, F2, F3) is arranged m each phase line (L1, L2 or L3) and that the conditioning impedances (Z1, Z2, Z3) are arranged between the fuses (F1, F2, F3) and the decoupling capacitors (C1, C2, C3) (as m figure 4) or not until after the decoupling capacitors (C1, C2, C3) (as m figure 2)

9. A method for carrying out both measurements and data transmission in etectric power distribution networks, wherein
a) for energy measurement and measurement m the low frequency range up to several KHz a first measuring module (MNF) is connectable to all three phase lines (L1, L2, L3) and null line (N) and is arranged at the line side, said first measuring module (MNF) comprising an antialiasing filter (AF) associated with this a Sigma-Delta-Modulator (M) and at least associated with this a decimation filter (DF1),
b) for the transient analysis m the higher frequency range a second measurement module (MHF) is connectable to all three phase lines (L1, L2, L3) and null line (N) and is disposed at the line side, consisting of at least an input amplifier (V) and connected to this an analog / digital converter (AD) and a mixer (MI) connected downstream to this filter (FI) and
c) a DSP- and MCU-module (1) standing m conjunction with the two measurement modules (MNF, MHF) and,
d) wherein the DSP-module (DSP) processes transmission, measurement and monitoring tasks by a timesharing method according to their priorities and the MCU-module (MCU) controls the DSP-module (DSP) and evaluation of the data provided by the DSP-module (DSP)

10. The method of claim 9, wherein between the mixer (MI) and DSP-module (DSP), the steps of a low pass-filtering (LP) and subsequently at least one decimation (D) and subsequently an intermediate memory (ZSP) are used.

11. The method of claim 9, wherein the input amplifier (V) of the second measuring module (MHF) is designed as an amplifier with non-linear characteristic, or that by a multiplexer is switched between the two input amplifiers with different characteristics

12. The method of claim 9, wherein the second measuring module (MHF) comprises at least a multiplexer (MUX) by means of which the input signals (U1, U2, U3) are directly connected to the analog / digital converter (AD) and processed m the time-multiplex mode or that an additional analog / digital converter is provided, to which the input signals (U1, U2, U3) are fed and which is connected to the DSP-module (DSP)

13. The method of claim 9, wherein further decimation filter (DF2, DF3 and DF4) m series are provided and that for the pre-processing the output signal of the decimation filters (DF2, DF3 and DF4) each one is connected to a filter (F2, F3 and F4) this connected to the DSP-module (DSP)

14. The method of claim 9, wherein m a ring loop a consumer (LA) is arranged and which is coupled to the ring loop by an isolating transformer (TR) and that between a power supply (SV) for the DSP-module (DSP) and said consumer (LA) a RF-choke (HFD) or a common mode choke (CMC) is arranged so that both a predetermined impedance and a filtering can be realized

15. The apparatus of claim 3, wherein said expansion module (9) is designed as a communication-gateway between outdoor- and in-house-area by which data and values to and from a central control- and processing system are transported and evaluated by that system, wherein the control as well as steering of the energy quality and/or of consumption reports are available

16. The apparatus of claim 1, wherein said DSP-module (1) comprises a PC-interface (4) thus by the DSP-module (1) functioning as transceiver a remote request and control of measuring data and of the data transmission could apply

17. The apparatus of claim 1, **characterized by** the integration m an electric meter arranged m the home area and/or by the integration m a transformer station.

## Revendications

1. Appareil permettant la mesure et la transmission de données dans un reseau de ligne d'alimentation, lequel présente:
a) dans la gamme basse de frequences jusqu'à quelques kHz au moms un coupleur ( 2a ) connecte cote reseau avec toutes les phases ( L1, L2, L3 ) et le neutre ( N ) et/ou dans la gamme haute de frequences ce coupleur ( 2a ) est connecte a l'aide d'un câble a 4 fils avec des phases en face ( L1, L3 ),
b) un filtre de découplage (5) avec au moins deux paires de selfs intégrées dans les fils en série ( L1, L2, L3, N ) ainsi qu'au moins trois impédances connectées entre les fils ( L1, L2, L3, N ),
c) un reseau de conditionnement ( 7, 8 ) connecte cote reseau ainsi que cote consommateur, compose au moins d'une impédance connectée entre deux fils,
d) un module de mesure ( 11 ) avec au moins un shunt ou un translateur, lequel est connecte au moins avec un fils ( L1 ),
e) un DSP- et MCU-module ( 1 ) connecte avec le module de mesure (11) et au moins avec un coupleur ( 2a ) et
f) un afficheur ( 10 ) en connexion avec le module DSP et MCU ( 1 ) ainsi qu'avec un module d'alimentation électrique ( 6 ),
g) de manière que le module DSP ( DSP ) effectue la fonction de transfert, de mesure et de surveillance en méthode de temps partage selon la priorité respective et que le module MCU ( MCU ) effectue la commande du module DSP ( DSP ) et l'exploitation de données fournie par le module DSP ( DSP )

2. Appareil selon revendication 1, **caracterise en ce que** le reseau de conditionnement ( 7, 8 ) est compose de trois impédances (Z₁, Z₂, Z₃) connectées entre deux phases (L1-L2, L2-L3 et L1-L3), lesquelles sont composées d'une résistance et d'un condensateur connectes en série.

3. Appareil selon revendication 1, **caracterise en ce qu'**un module d'extension ( 9 ) est prévu, lequel est connecte avec deux coupleurs ( 2a, 2b ) situes non seulement cote reseau mais aussi cote consommateur et le module DSP et MCU ( 1 )

4. Appareil selon revendication 1, **caracterise en ce que** le module de mesure ( 11 ) pour la mesure de puissance possède au moms trois translateurs et/ou shunts connectes avec les phases ( L1, L2 et L3 ) et /ou qu'un translateur complémentaire et/ou shunt connecte avec le neutre ( N ) sert pour la vérification de la symétrie (courants de défaut).

5. Appareil selon revendication 1, **caracterise en ce que** l'intégration des translateurs pour la mesure de puissance du module de mesure ( 11 ) dans le filtre de découplage (5)

6. Appareil selon revendication 1, **caracterise en ce que** le filtre de découplage ( 5 ) sert en même temps de filtrage de reseau pour le module d'alimentation électrique ( 6 ), ou le module d'alimentation électrique ( 6 ) est connecte en parallèle avec les impédances du filtre de découplage ( 5 ) entre le neutre ( N ) et une des phases ( L1, L2 ou L3 ) avec le reseau

7. Appareil selon revendication 1, **caracterise en ce que** le coupleur ( 2a, 2b ) possède au moins un condensateur de découplage (C₁, C₂, C₃) et une résistance de decharge (R1, R2, R3), lesquels sont connectes avec les phases (L1, L2 ou L3)

8. Appareil selon revendication 7, **caractérise en ce que** dans chaque phase ( L1, L2 ou L3 ) se trouve un fusible ( F1, F2, F3 ) et que les impédances de conditionnement (Z₁, Z₂, Z₃) sont situées entre les fusibles ( F1, F2, F3 ) et les condensateurs de découplage (C₁, C₂, C₃) ( selon figure 4 ) ou aussi a l'arrière des condensateurs de découplage (C₁, C₂, C₃) ( selon figure 2 )

9. Procédé pour la réalisation non seulement des mesures mais aussi pour la transmission de données dans des reseaux de ligne d'alimentation, ou
a) pour la mesure d'énergie et la mesure dans la basse gamme de frequences jusqu'à quelques kHz on a prévu un premier module de mesure ( MNF ) connectable avec toutes les trois phases (L1, L2, L3) et le neutre ( N ) et situe cote reseau, compose d'un filtre antialiasing ( AF ), un modulateur ΣΔ ( M ) connecte avec celui et au moins un filtre de décimation ( DF1 ) connecte avec celui,
b) pour l'analyse transitoire dans la haute gamme de frequences on a prévu un deuxième module de mesure ( MHF ) connectable avec toutes les trois phases (L1, L2, L3) et le neutre ( N ) et situe cote reseau, compose au moms d'un amplificateur d'entree ( V ), un filtre ( FI ) connecte avec celui et un convertisseur analogique/numérique ( AD ) avec un etage melangeur suivant et
c) avec les deux modules de mesure ( MNF, MHF ) un module DSP et MCU ( 1 ) est connecte de telle manière,
d) que le module DSP ( DSP ) effectue la fonction de transfert, de mesure et de surveillance en méthode de temps partage selon la priorité respective et que le module MCU ( MCU ) effectue la commande du module DSP ( DSP ) et l'exploitation de données fournies par le module DSP ( DSP )

10. Procède selon revendication 9, **caractérisé en ce que** entre l'etage melangeur ( MI ) et le module DSP ( DSP ) un traitement par un filtre passe-bas ( LP ) est effectue suivi par un etage de décimation ( D ) et suivi d'une mémoire intermédiaire ( ZSP )

11. Procède selon revendication 9, **caractérisé en ce que** l'amplificateur d'entree ( V ) du deuxième module de mesure ( MHF ) est un amplificateur avec une caractéristique non-linéaire ou qu'a l'aide d'un multiplexeur on peut commuter entre deux amplificateurs d'entree avec de différentes caractéristiques

12. Procède selon revendication 9, **caractérisé en ce que** le deuxième module de mesure ( MHF ) possède au moms un multiplexeur ( MUX ), à l'aide de ce multiplexeur ( MUX ) les signaux d'entree ( U1, U2, U3 ) sont transmis directement au convertisseur analogique/numérique ( AD ) et traites en multiplexage par partage de temps ou qu'un convertisseur analogique/numérique complémentaire est prévu auquel les signaux d'entree ( U1, U2, U3 ) sont transmis et lequel est connecte avec le module DSP ( DSP )

13. Procède selon revendication 9, **caractérisé en ce qu'**on a prévu d'autres filtres de décimation ( DF2, DF et DF4 ) connectes en série et que pour un prétraitement les signaux de sortie des filtres de décimation ( DF2, DF3 et DF4 ) sont transmis a un des filtres (F2, F3 et F4) connectes avec le module DSP ( DSP )

14. Procédé selon revendication 9, **caractérisé en ce que** des consommateurs positionnés dans une boucle électrique sont connectes avec cette boucle par un transformateur de séparation ( TR ) et qu'une self pour haute frequence ( HFD ) ou une self de compensation de courant est située entre une alimentation électrique ( SV ) pour le module DSP ( DSP ) et le consommateur ( LA ) par laquelle non seulement une impédance déterminée mais aussi un filtrage peut être réalisé.

15. Appareil selon revendication 3, **caractérisé en ce que** le module d'extension ( 9 ) est configure comme jonction de communication entre l'extérieur et l'intérieur du bâtiment par lequel des données et des valeurs du et au systeme de commande et de traitement peuvent être transmises et exploitées, pour que le contrôle respectivement la commande de la qualité d'énergie et/ou la facturation de la consommation d'énergie électrique puisse être réalisable

16. Appareil selon revendication 1, **caractérisé en ce que** le module DSP ( 1 ) possède une interface pour ordinateur personnel ( 4 ) a l'aide de cette interface on peut effectuer une interrogation a distance respectivement un contrôle a distance des données de mesure et la transmission de données a l'aide du module DSP ( 1 ) comme transmetteur

17. Appareil selon revendication 3, **caractérisé en ce que** par l'intégration dans le compteur du branchement d'immeuble et/ou dans la cabine de transformateur
